# EUROPEAN PATENT APPLICATION

(11) **EP 4 779 516 A1**
(43) Date of publication of application: **22.07.2026**
(21) Application number: 24869776.5
(22) Date of filing: 27.05.2024
(51) Int. Cl.: G06K 17/00

(54) **DATA ACQUISITION METHOD AND COMMUNICATION APPARATUS**

(30) Priority: 28.09.2023 CN 202311292266
(71) Applicant: HUAWEI TECHNOLOGIES CO., LTD., Shenzhen 518129 (CN)
(72) Inventor: ZHENG, Xiaochun, Shenzhen, Guangdong 518129 (CN); LIAO, Ting, Shenzhen, Guangdong 518129 (CN)
(74) Representative: Grünecker Patent- und Rechtsanwälte PartG mbB
(86) International application number: PCT/CN2024/095486
(87) International publication number: WO 2025/066211

(57) **Abstract**

A data collection method and a communication apparatus are provided. A core network element and a reader/writer may send first information to an internet of things device by using downlink signaling that is sent before the internet of things device registers with the core network element, to indicate the internet of things device to collect sensor data. In this way, the internet of things device may start the collection of the sensor data before registering with the core network element. This helps advance time at which the internet of things device reports the sensor data, thereby improving efficiency of obtaining the sensor data of the tag by the core network element.

## Description

This application claims priority to Chinese Patent Application No. 202311292266.3, filed with the China National Intellectual Property Administration on September 28, 2023 and entitled "DATA COLLECTION METHOD AND COMMUNICATION APPARATUS", which is incorporated herein by reference in its entirety.

### TECHNICAL FIELD

This application relates to the communication field, and more specifically, to a data collection method and a communication apparatus.

### BACKGROUND

Currently, main application scenarios of devices (such as passive tags or semi-passive tags) in internet of things (internet of things, IoT) include the following scenarios: (1) logistics and warehousing, including goods inventory and tracking, and environment and goods status monitoring for high-value goods (such as vaccines) in a transportation process; and (2) industrial manufacturing, including environment and device status monitoring. With the development of technologies and environmental protection requirements, the internet of things is promising in larger-scale application and deployment, and it is predicted that hundreds of billions of devices will be covered in the future.

An internet of things device may have a sensor function, and may collect sensor data by using a sensor. After the internet of things device registers with a network, the network may send a request for obtaining the sensor data to the internet of things device. The internet of things device may start collection of the sensor data based on the request of the network, and report the sensor data to the network after the collection is completed. However, in this manner, efficiency of obtaining the sensor data of the internet of things device by the network is very low.

### SUMMARY

This application provides a data collection method and a communication apparatus, to improve efficiency of obtaining sensor data of an internet of things device by a network.

According to a first aspect, a data collection method is provided. The method may be performed by an internet of things device. Unless otherwise specified, the "internet of things device" may be the internet of things device, or may be an apparatus that can support the internet of things device in implementing a function. Optionally, the internet of things device may be a tag. The tag can be a passive tag, a semi-passive tag, or an active tag.

The method includes: A first internet of things device receives first information from a reader/writer, where the first information indicates the first internet of things device to collect sensor data, and the first information is carried in downlink signaling that is sent before the first internet of things device registers with a core network element; the first internet of things device collects first sensor data based on the first information; and the first internet of things device sends the first sensor data to the reader/writer.

It should be noted that, "before the first internet of things device registers with the core network element" may include: before the first internet of things device sends a registration request message and in a process in which the first internet of things device registers with the core network element. In other words, the first information may be carried in the downlink signaling that is before the registration request message or the downlink signaling that is in the process in which the first internet of things device registers with the core network element.

The downlink signaling before the registration request message includes at least one of the following: a first excitation signal, a first selection command, and downlink signaling in a first random access procedure. The first excitation signal is for powering a to-be-inventoried internet of things device, the first selection command is for selecting the to-be-inventoried internet of things device, and the first internet of things device belongs to the to-be-inventoried internet of things device. The downlink signaling in the process in which the first internet of things device registers with the core network element includes at least one of the following: a first registration message or downlink signaling in a first security authentication process. The first registration message indicates that the first internet of things device has successfully registered with the core network element.

According to the foregoing method, the reader/writer may send the first information to the first internet of things device by using the downlink signaling that is sent before the first internet of things device registers with the core network element, to indicate the first internet of things device to collect the sensor data. In this way, the first internet of things device may start the collection of the sensor data before registering with the core network element. In comparison with starting the collection of the sensor data based on a data reading request message from the core network element after the registration succeeds, the first internet of things device starts the collection of the sensor data before registering with the core network element. This helps advance time at which the first internet of things device reports the sensor data, thereby improving efficiency of obtaining the sensor data of the tag by the core network element.

In addition, when the reader/writer includes the first information in the first excitation signal, the first selection command, or the downlink signaling in the first random access procedure, each to-be-inventoried internet of things device in a range of the reader/writer may collect sensor data in advance based on the first information. In this way, time at which each to-be-inventoried internet of things device reports the sensor data is advanced, thereby further improving efficiency of obtaining the sensor data by the core network element.

With reference to the first aspect, in some possible implementations, the downlink signaling in the random access procedure includes a query command and/or an acknowledgement command; the first registration message is a registration response message or a registration accept message; and/or downlink first signaling in the first security authentication process includes an authentication success message and/or an authentication request message.

With reference to the first aspect or any implementation of the first aspect, in some other possible implementations, the first information is carried in the first excitation signal, the first selection command, or the downlink signaling in the first random access procedure; and the first sensor data is carried in a second registration message, uplink signaling in the first security authentication process, or uplink signaling related to service transmission, and the second registration message is for requesting to register with the core network element.

In comparison with starting the collection of the sensor data based on the data reading request message from the core network element after the registration succeeds, the first internet of things device collects the sensor data based on the first information in the first excitation signal, the first selection command, or the downlink signaling in the first random access procedure. This helps advance the time at which the first internet of things device reports the sensor data, thereby improving efficiency of obtaining the sensor data of the tag by the core network element.

With reference to the first aspect or any implementation of the first aspect, in some other possible implementations, the first information is carried in the first registration message or the downlink signaling in the first security authentication process; and the first sensor data is carried in uplink signaling related to service transmission.

In comparison with starting the collection of the sensor data based on the data reading request message from the core network element after the registration succeeds, the first internet of things device collects the sensor data based on the first information in the first registration message or the downlink signaling in the first security authentication process. This helps advance the time at which the first internet of things device reports the sensor data, thereby improving efficiency of obtaining the sensor data of the tag by the core network element.

With reference to the first aspect or any implementation of the first aspect, in some other possible implementations, the method further includes: The first internet of things device receives second information from the reader/writer, where the second information indicates the first internet of things device to report sensor data. That the first internet of things device sends the first sensor data to the reader/writer includes: The first internet of things device sends the first sensor data to the reader/writer based on the second information. The first information is carried in the first excitation signal, the first selection command, the downlink signaling in the first random access procedure, or the downlink signaling in the first security authentication process, and the second information is carried in the first registration message.

According to the foregoing method, the first internet of things device may report the first sensor data based on reporting indication information of a network side.

With reference to the first aspect or any implementation of the first aspect, in some other possible implementations, after the sending the first sensor data, the method further includes: The first internet of things device receives the first information from the reader/writer; the first internet of things device collects and buffers second sensor data based on the first information; the first internet of things device receives second information, where the second information indicates the first internet of things device to report sensor data, the second information is carried in a second excitation signal, a second selection command, or downlink signaling in a second random access procedure, the second excitation signal is for powering the to-be-inventoried internet of things device, and the second selection command is for selecting the to-be-inventoried internet of things device; the first internet of things device sends the second sensor data to the reader/writer based on the second information, where the second sensor data is carried in a third registration message, and the third registration message is for requesting to register with the core network element; and after sending the second sensor data, the first internet of things device receives the first information from the reader/writer.

According to the foregoing method, after sending the first sensor data, the first internet of things device may collect the second sensor data based on the first information that is received again. When the core network element indicates the first internet of things device to report the sensor data again, the first internet of things device may directly report the second sensor data collected in advance. This helps improve efficiency of obtaining the sensor data by the core network element.

With reference to the first aspect or any implementation of the first aspect, in some other possible implementations, the method further includes: The first internet of things device receives third information from the reader/writer, where the third information indicates the first internet of things device to send feedback information when the collection of the sensor data is not completed, and the feedback information indicates to maintain a communication connection to the first internet of things device.

According to the foregoing method, before completing the collection of the first sensor data, the first internet of things device keeps maintaining the communication connection to the network side. Once the collection of the first sensor data is completed, the first internet of things device may report the first sensor data to the core network element in time. This helps improve efficiency of obtaining the sensor data by the core network element.

With reference to the first aspect or any implementation of the first aspect, in some other possible implementations, the third information and the first information are carried in same signaling; or the first information is carried in the first excitation signal, the first selection command, the downlink signaling in the first random access procedure, or the downlink signaling in the first security authentication process, and the third information is carried in the first registration message.

With reference to the first aspect or any implementation of the first aspect, in some other possible implementations, the third information further indicates a periodicity for sending the feedback information.

With reference to the first aspect or any implementation of the first aspect, in some other possible implementations, the method further includes: Before completing the collection of the first sensor data, the first internet of things device sends one or more pieces of feedback information to the reader/writer.

With reference to the first aspect or any implementation of the first aspect, in some other possible implementations, the first internet of things device completes the collection of the first sensor data after first duration. That the first internet of things device sends the first sensor data to the reader/writer includes: The first internet of things device re-establishes a communication connection to the reader/writer, and sends the first sensor data to the reader/writer on the communication connection.

According to the foregoing method, the network side may maintain the communication connection to the first internet of things device in a preset time period. In this way, long-time waiting for an internet of things device to report sensor data can be avoided. This helps another internet of things device access a network in time, and helps improve efficiency of obtaining the sensor data by the core network element.

With reference to the first aspect or any implementation of the first aspect, in some other possible implementations, the method further includes: The first internet of things device receives fourth information from the reader/writer, where the fourth information indicates the first duration.

With reference to the first aspect or any implementation of the first aspect, in some other possible implementations, the fourth information and the first information are carried in same signaling; or the first information is carried in the first excitation signal, the first selection command, the downlink signaling in the first random access procedure, or the downlink signaling in the first security authentication process, and the fourth information is carried in the first registration message.

According to a second aspect, a data collection method is provided. The method may be performed by a core network element. Unless otherwise specified, the "core network element" may be the core network element, or may be an apparatus that can support the core network element in implementing a function. The core network element is a network element responsible for internet of things device management, for example, a tag management function (tag management function, TMF).

The method includes: The core network element receives a data request message from an application function network element, where the data request message is for requesting sensor data of a to-be-inventoried internet of things device, and the to-be-inventoried internet of things device includes a first internet of things device; the core network element sends first information to a reader/writer based on the data request message, where the first information indicates the first internet of things device to collect sensor data, and the first information is carried in downlink signaling that is sent before the first internet of things device registers with the core network element; the core network element receives first sensor data of the first internet of things device from the reader/writer; and the core network element sends the first sensor data to the application function network element.

For descriptions of "before the first internet of things device registers with the core network element", refer to the first aspect.

In the second aspect, the downlink signaling before a registration request message includes a first inventory request message, and the inventory request message is for requesting to inventory the to-be-inventoried internet of things device. The downlink signaling in a process in which the first internet of things device registers with the core network element includes at least one of the following: a first registration message or downlink signaling in a first security authentication process. The first registration message indicates that the first internet of things device has successfully registered with the core network element.

According to the foregoing method, the core network element may send the first information to the reader/writer by using the downlink signaling that is sent before the first internet of things device registers with the core network element, to indicate the first internet of things device to collect the sensor data. In this way, the first internet of things device may start the collection of the sensor data before registering with the core network element. In comparison with starting the collection of the sensor data based on a data reading request message from the core network element after the registration succeeds, the first internet of things device starts the collection of the sensor data before registering with the core network element. This helps advance time at which the first internet of things device reports the sensor data, thereby improving efficiency of obtaining the sensor data of the tag by the core network element.

In addition, when the core network element includes the first information in the first inventory request message, the reader/writer may be supported in including the first information in the first excitation signal, the first selection command, or the downlink signaling in the first random access procedure. In this way, each to-be-inventoried internet of things device in a range of the reader/writer may collect sensor data in advance based on the first information. In this way, time at which each to-be-inventoried internet of things device reports the sensor data is advanced, thereby further improving efficiency of obtaining the sensor data by the core network element.

With reference to the second aspect, in some possible implementations, the first registration message is a registration response message or a registration accept message; and/or the downlink signaling in the first security authentication process includes an authentication success message and/or an authentication request message.

With reference to the second aspect or any implementation of the second aspect, in some other possible implementations, the first information is carried in the first inventory request message; and the first sensor data is carried in a second registration message, uplink signaling in the first security authentication process, or uplink signaling related to service transmission, and the second registration message is for requesting to register with the core network element.

With reference to the second aspect or any implementation of the second aspect, in some other possible implementations, the first information is carried in the first registration message or the downlink signaling in the first security authentication process; and the first sensor data is carried in uplink signaling related to service transmission.

With reference to the second aspect or any implementation of the second aspect, in some other possible implementations, the method further includes: The core network element sends second information to the reader/writer, where the second information indicates the first internet of things device to report sensor data, the first information is carried in the first inventory request message, and the second information is carried in the first registration message.

With reference to the second aspect or any implementation of the second aspect, in some other possible implementations, the data request message includes periodicity information, where the periodicity information indicates a periodicity for inventorying the to-be-inventoried internet of things device; transmission of the first information and the first sensor data is performed in a first periodicity; and the method further includes: The core network element sends, in a second periodicity, the first information to the reader/writer by using a second inventory request message or a fourth registration message, where the fourth registration message indicates that the first internet of things device has successfully registered with the core network element.

With reference to the second aspect or any implementation of the second aspect, in some other possible implementations, the data request message includes periodicity information, where the periodicity information indicates a periodicity for inventorying the to-be-inventoried internet of things device; and transmission of the first information and the first sensor data is performed in a first periodicity; and the method further includes: After receiving the first sensor data, the core network element sends the first information to the reader/writer in the first periodicity; and the core network element sends, in a second periodicity, second information to the reader/writer by using a second inventory request message, where the second information indicates the first internet of things device to report sensor data; the core network element receives second sensor data of the first internet of things device from the reader/writer, where the second sensor data is carried in a third registration message, and the third registration message is for requesting to register with the core network element; and after receiving the second sensor data, the core network element sends the first information to the reader/writer.

With reference to the second aspect or any implementation of the second aspect, in some other possible implementations, the data request message includes a first data amount, where the first data amount is a data amount for triggering the core network element to report sensor data to the application function network element. That the core network element sends the first sensor data to the application function network element includes: When sensor data buffered in the core network element reaches the first data amount, the core network element sends the sensor data buffered in the core network element to the application function network element, where the sensor data buffered in the core network element includes the first sensor data.

With reference to the second aspect or any implementation of the second aspect, in some other possible implementations, the data request message includes indication information, where the indication information indicates signaling that carries the first information. That the core network element sends the first information to the reader/writer based on the data request message includes: The core network element sends, based on the data request message, the first information to the reader/writer in the signaling indicated by the indication information.

With reference to the second aspect or any implementation of the second aspect, in some other possible implementations, the method further includes: The core network element sends third information to the reader/writer, where the third information indicates the first internet of things device to send feedback information when the collection of the sensor data is not completed, and the feedback information indicates to maintain a communication connection to the first internet of things device.

With reference to the second aspect or any implementation of the second aspect, in some other possible implementations, the third information and the first information are carried in same signaling; or the first information is carried in the first inventory request message or the downlink signaling in the first security authentication process, and the third information is carried in the first registration message.

With reference to the second aspect or any implementation of the second aspect, in some other possible implementations, the third information further indicates a periodicity for sending the feedback information.

With reference to the second aspect or any implementation of the second aspect, in some other possible implementations, the method further includes: The core network element does not receive the first sensor data from the reader/writer in first duration; and after the first duration, the core network element disconnects the communication connection to the first internet of things device, and sends fifth information to the reader/writer, where the fifth information indicates to inventory a next internet of things device. That the core network element receives the first sensor data of the first internet of things device from the reader/writer includes: The core network element re-establishes a communication connection to the first internet of things device, and receives the first sensor data on the communication connection.

With reference to the second aspect or any implementation of the second aspect, in some other possible implementations, the method further includes: The core network element starts a first timer, where timing duration of the first timer is the first duration.

With reference to the second aspect or any implementation of the second aspect, in some other possible implementations, before the core network element sends the fifth information to the reader/writer, the method further includes: The core network element receives sixth information from the reader/writer, where the sixth information is for requesting to inventory a next internet of things device.

With reference to the second aspect or any implementation of the second aspect, in some other possible implementations, the method further includes: The core network element sends fourth information to the reader/writer, where the fourth information indicates the first duration.

With reference to the second aspect or any implementation of the second aspect, in some other possible implementations, the fourth information and the first information are carried in same signaling; or the first information is carried in the first inventory request message or the downlink signaling in the first security authentication process, and the fourth information is carried in the first registration message.

For terms or features that are in the second aspect or the implementations of the second aspect and that are the same as those in the first aspect or the implementations of the first aspect, refer to the first aspect or the implementations of the first aspect. For technical effects in the second aspect or the implementations of the second aspect, refer to the technical effects in the first aspect or the implementations of the first aspect. Details are not described in the second aspect.

According to a third aspect, a data collection method is provided. The method may be performed by an application function network element. Unless otherwise specified, the "application function network element" may be the application function network element, or may be an apparatus that can support the application function network element in implementing a function.

The method includes: The application function network element determines a data request message, where the data request message is for requesting sensor data of a to-be-inventoried internet of things device, and the data request message includes one or more of the following information: periodicity information, a buffered data amount, or indication information, where the periodicity information indicates a periodicity for inventorying the to-be-inventoried internet of things device, the buffered data amount is a data amount for triggering a core network element to report sensor data to the application function network element, the indication information indicates signaling that carries first information, the first information indicates a first internet of things device to collect sensor data, and the first internet of things device belongs to the to-be-inventoried internet of things device; and the application function network element sends the data request message to the core network element.

According to the foregoing method, the application function network element may provide, to a specified core network element, at least one of the periodicity information for inventory, the data amount for triggering reporting of the sensor data, or the signaling for sending the first information. In this way, the inventory can be more flexible.

With reference to the third aspect, in some possible implementations, the signaling that carries the first information is downlink signaling that is sent before the first internet of things device registers with the core network element. For specific descriptions, refer to the second aspect.

According to a fourth aspect, a data collection method is provided. The method may be performed by a reader/writer. Unless otherwise specified, the "reader/writer" may be the reader/writer, or may be an apparatus that can support the reader/writer in implementing a function. The reader/writer may be integrated into an access network device, a relay device, a terminal device, or the like, or may be a dedicated reader/writer. This is not limited.

The method includes: The reader/writer receives first information from a core network element, where the first information indicates a first internet of things device to collect sensor data; the reader/writer sends the first information to the first internet of things device; the reader/writer receives first sensor data from the first internet of things device; and the reader/writer sends the first sensor data to the core network element, where the first information is carried in downlink signaling that is sent before the first internet of things device registers with the core network element.

For descriptions of "before the first internet of things device registers with the core network element", refer to the first aspect.

For the downlink signaling that is received by the reader/writer and that is before a registration request message, refer to the second aspect. For the downlink signaling that is sent by the reader/writer and that is before the registration request message, refer to the first aspect. For the downlink signaling that is received by the reader/writer and that is in a process in which the first internet of things device registers with the core network element, refer to the second aspect. For the downlink signaling that is sent by the reader/writer and that is in the process in which the first internet of things device registers with the core network element, refer to the first aspect.

With reference to the fourth aspect, in some possible implementations, downlink signaling in a random access procedure includes a query command and/or an acknowledgement command; and downlink first signaling in a first security authentication process includes an authentication success message and/or an authentication request message.

With reference to the fourth aspect or any implementation of the fourth aspect, in some other possible implementations, the first information received by the reader/writer is carried in a first inventory request message; the first information sent by the reader/writer is carried in a first excitation signal, a first selection command, or downlink signaling in a first random access procedure; and the first sensor data is carried in a second registration message, uplink signaling in the first security authentication process, or uplink signaling related to service transmission, and the second registration message is for requesting to register with the core network element.

With reference to the fourth aspect or any implementation of the fourth aspect, in some other possible implementations, the first information is carried in a first registration message or the downlink signaling in the first security authentication process; and the first sensor data is carried in the uplink signaling related to service transmission.

With reference to the fourth aspect or any implementation of the fourth aspect, in some other possible implementations, the method further includes: The reader/writer receives second information from the core network element, where the second information indicates the first internet of things device to report sensor data; and the reader/writer sends the second information to the first internet of things device, where the first information received by the reader/writer is carried in the first inventory request message, the first information sent by the reader/writer is carried in the first excitation signal, the first selection command, the downlink signaling in the first random access procedure, or the downlink signaling in the first security authentication process, and the second information is carried in the first registration message.

With reference to the fourth aspect or any implementation of the fourth aspect, in some other possible implementations, after the sending the first sensor data, the method further includes: The reader/writer receives the first information from the core network element, and sends the first information to the first internet of things device; the reader/writer receives second information from the core network element, where the second information indicates the first internet of things device to report sensor data, and the second information is carried in a second inventory request message; the reader/writer sends the second information to the first internet of things device by using a second excitation signal, a second selection command, or downlink signaling in a second random access procedure, where the second excitation signal is for powering a to-be-inventoried internet of things device, and the second selection command is for selecting the to-be-inventoried internet of things device; the reader/writer receives a third registration message from the first internet of things device, where the third registration message is for requesting to register with the core network element, and the third registration message includes second sensor data; the reader/writer sends the third registration message to the core network element; and after sending the third registration message, the reader/writer receives the first information from the core network element, and sends the first information to the first internet of things device.

With reference to the fourth aspect or any implementation of the fourth aspect, in some other possible implementations, the method further includes: The reader/writer receives third information from the core network element, where the third information indicates the first internet of things device to send feedback information when the collection of the sensor data is not completed, and the feedback information indicates to maintain a communication connection to the first internet of things device; and the reader/writer sends the third information to the first internet of things device.

With reference to the fourth aspect or any implementation of the fourth aspect, in some other possible implementations, the third information and the first information are carried in same signaling; or the first information received by the reader/writer is carried in the first inventory request message, the first information sent by the reader/writer is carried in the first excitation signal, the first selection command, or the downlink signaling in the first random access procedure, and the third information is carried in the first registration message.

With reference to the fourth aspect or any implementation of the fourth aspect, in some other possible implementations, the third information further indicates a periodicity for sending the feedback information.

With reference to the fourth aspect or any implementation of the fourth aspect, in some other possible implementations, the method further includes: The reader/writer receives one or more pieces of feedback information from the first internet of things device, and sends the one or more pieces of feedback information to the core network element.

With reference to the fourth aspect or any implementation of the fourth aspect, in some other possible implementations, the method further includes: The reader/writer does not receive the first sensor data from the reader/writer in first duration; and after the first duration, the reader/writer disconnects the communication connection to the first internet of things device, and receives fifth information from the core network element, where the fifth information indicates to inventory a next internet of things device. That the reader/writer receives the first sensor data from the first internet of things device includes: The reader/writer re-establishes a communication connection to the first internet of things device, and receives the first sensor data on the communication connection.

With reference to the fourth aspect or any implementation of the fourth aspect, in some other possible implementations, the method further includes: The core network element starts a first timer, where timing duration of the first timer is the first duration; and before receiving the fifth information, the reader/writer sends sixth information to the core network element, where the sixth information is for requesting to inventory the next internet of things device.

With reference to the fourth aspect or any implementation of the fourth aspect, in some other possible implementations, the method further includes: The reader/writer receives fourth information from the core network element, where the fourth information indicates the first duration.

With reference to the fourth aspect or any implementation of the fourth aspect, in some other possible implementations, the method further includes: The reader/writer sends the fourth information to the first internet of things device.

For terms or features that are in the fourth aspect or the implementations of the fourth aspect and that are the same as those in the first aspect or the implementations of the first aspect, refer to the first aspect or the implementations of the first aspect. For technical effects in the fourth aspect or the implementations of the fourth aspect, refer to the technical effects in the first aspect or the implementations of the first aspect. Details are not described in the fourth aspect.

According to a fifth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a transceiver unit.

In an implementation, the apparatus is an internet of things device, a core network element, an application function network element, or a reader/writer. When the apparatus is the internet of things device, the core network element, the application function network element, or the reader/writer, the transceiver unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in the internet of things device, the core network element, the application function network element, or the reader/writer. When the apparatus is the chip, the chip system, or the circuit used in the internet of things device, the core network element, the application function network element, or the reader/writer, the transceiver unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a communication apparatus is provided. The apparatus includes a memory, configured to store a program; and at least one processor, configured to execute a computer program or instructions stored in the memory, to perform the method provided in any one of the foregoing aspects or the implementations of the foregoing aspects.

In an implementation, the apparatus is an internet of things device, a core network element, an application function network element, or a reader/writer.

In another implementation, the apparatus is a chip, a chip system, or a circuit used in the internet of things device, the core network element, the application function network element, or the reader/writer.

According to a seventh aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to an eighth aspect, a processor is provided. The processor is configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable storage medium stores program code to be executed by a device, and the program code is used to perform the method provided in any one of the foregoing aspects or the implementations of the foregoing aspects.

According to a tenth aspect, a computer program product including instructions is provided. When the computer program product is run on a computer, the computer is caused to perform the method provided in any one of the foregoing aspects or the implementations of the foregoing aspects.

According to an eleventh aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to a twelfth aspect, a communication system is provided, and includes at least one of the internet of things device, the core network element, the application function network element, or the reader/writer described above.

According to a thirteenth aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 is a diagram of a network architecture to which an embodiment of this application is applied;
FIG. 2 is a schematic flowchart of tag sensor data collection and reading;
FIG. 3 is a schematic flowchart of a data collection method 300 according to this application;
FIG. 4 is a schematic flowchart of a data collection method 400 according to this application;
FIG. 5 is a schematic flowchart of a data collection method 500 according to this application;
FIG. 6A and FIG. 6B are a schematic flowchart of a data collection method 600 according to this application;
FIG. 7 is a diagram of a structure of an apparatus according to an embodiment of this application;
FIG. 8 is a diagram of another structure of an apparatus according to an embodiment of this application; and
FIG. 9 is a diagram of a chip system according to an embodiment of this application.

### DESCRIPTION OF EMBODIMENTS

For ease of understanding embodiments of this application, before embodiments of this application are described, the following several descriptions are first provided.

An "indication" includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured. That information C is for determining information D includes: The information D is determined based on only the information C, and the information D is determined based on the information C and other information. In addition, that the information C is for determining the information D may further include an indirect determining case. For example, the information D is determined based on information E, and the information E is determined based on the information C. "A network element A sends information A to a network element B" may be understood as that a destination end of the information A or an intermediate network element in a transmission path to the destination end is the network element B, and may include directly or indirectly sending the information to the network element B. "The network element B receives the information A from the network element A" may be understood as that a source end of the information A or an intermediate network element in a transmission path from the source end is the network element A, and may include directly or indirectly receiving the information from the network element A. Information may undergo necessary processing, for example, a format change, between the source end for sending the information and the destination end. However, the destination end may understand valid information from the source end. First, second, and the like numbers are merely used for differentiation for ease of description, and are not used to limit the scope of embodiments of this application, for example, to distinguish between different messages and different information. The "predefine" may be implemented by prestoring, in a device, corresponding code, a corresponding table, or other related information that may be used for indication. A specific implementation thereof is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. The words such as "exemplary", "for example", "example", and "in an (another) example" are used to represent giving an example, an illustration, or a description. Any embodiment or design solution described as an "example" in this application should not be explained as being more preferred or having more advantages than another embodiment or design solution. The terms "include", "comprise", "have", and their variants all mean "include but are not limited to", unless otherwise specifically emphasized in another manner. "At least one" means one or more, and "a plurality of" means two or more. "At most one" means one or zero. "And/or" describes an association relationship between associated objects, and indicates that three relationships may exist. For example, A and/or B may represent the following three cases: Only A exists, both A and B exist, and only B exists, where A and B may be in a singular form or a plural form. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Descriptions such as "when...", "in a case of...", and "if" all mean that a device performs corresponding processing in an objective case, and are not limited to time, and the device is not required to perform a determining action during implementation. This does not mean that there is another limitation.

In embodiments of this application, "uplink signaling" may be signaling sent by a terminal device (for example, an internet of things device) to a network (for example, a reader/writer or a core network element), and "downlink signaling" may be signaling sent by the network (for example, the reader/writer or the core network element) to the terminal device (for example, the internet of things device). For example, a downlink of the downlink signaling refers to a signaling sending direction from an application function network element to the core network element, then to an access network device, and then to the internet of things device; and an uplink of the uplink signaling refers to a signaling sending direction from the internet of things device to the access network device, then to the core network element, and then to the application function network element. The downlink signaling or the uplink signaling is not necessarily end-to-end (that is, from the internet of things device to the application function network element), and may be in a corresponding direction, for example, may be from the internet of things device to the core network element or the access network device.

In addition, a network architecture and a service scenario described in embodiments of this application are intended to describe technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes a communication system to which embodiments of this application may be applied.

Embodiments of this application may be applied to a scenario in which a conventional radio frequency identification (radio frequency identification, RFID) system is optimized, or may be applied to a scenario in which a tag is inventoried through a mobile communication system. This is not limited. The following describes the technical solutions in this application by using a scenario in which the tag is inventoried through the mobile communication system as an example.

Embodiments of this application may be applied to various mobile communication systems, such as a long term evolution (long term evolution, LTE) system, an LTE frequency division duplex (frequency division duplex, FDD) system, an LTE time division duplex (time division duplex, TDD) system, a public land mobile network (public land mobile network, PLMN), a 5th generation (5th generation, 5G) system, a 6th generation (6th generation, 6G) system, or a future communication system. The 5G system in this application includes a non-standalone (non-standalone, NSA) 5G mobile communication system or a standalone (standalone, SA) 5G mobile communication system. Embodiments of this application may be further applied to a non-terrestrial network (non-terrestrial network, NTN) communication system like a satellite communication system. Embodiments of this application may be further applied to a device-to-device (device-to-device, D2D) communication system, a sidelink (sidelink, SL) communication system, a machine-to-machine (machine-to-machine, M2M) communication system, a machine type communication (machine type communication, MTC) system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

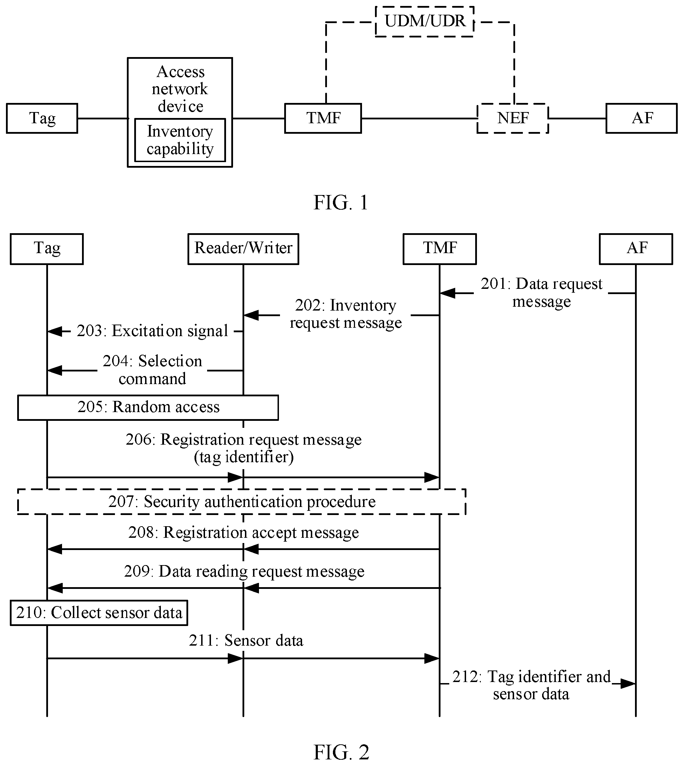

For example, FIG. 1 shows a network architecture to which an embodiment of this application may be applied.

FIG. 1 is a diagram of a network architecture to which an embodiment of this application is applied. The network architecture may include a tag (Tag), an access network device, a tag management function (tag management function, TMF), and an application function (application function, AF). The tag may perform interaction with the TMF through the access network device. The access network device may communicate with the TMF through an interface. The TMF may communicate with the AF directly or through a network exposure function (network exposure function, NEF). Optionally, the network architecture may further include a unified data management (unified data management, UDM) network element, a unified data repository (unified data repository, UDR), and the like. The TMF may communicate with the UDM/UDR through an interface. In FIG. 1, dashed lines and dashed boxes represent optional network elements and optional connections.

The following briefly describes network elements or devices in FIG. 1.

### 1. Tag

In embodiments of this application, the tag may also be referred to as a terminal, a terminal device, user equipment (user equipment, UE), an access terminal, a subscriber unit, a subscriber station, a mobile station, a remote station, a remote terminal, a mobile device, a user terminal, a wireless communication device, a user agent, a user apparatus, an internet of things terminal, an internet of things device, an internet of things terminal device, or the like. The terminal may be a passive internet of things terminal, or may be a tag. The terminal may be a passive device. The passive device may be a passive tag. The passive tag may collect energy by using a backscattering technology, to receive and send a packet. The passive tag includes but is not limited to a terminal tag without a power supply, for example, radio frequency identification (radio frequency identification, RFID), Bluetooth, or Zigbee. The terminal may alternatively be a semi-passive device or an active device. The active device may be a device having a wireless transceiver function, for example, a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G mobile communication system, a terminal in a future evolved network, or the like. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include fullfeatured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

It should be noted that an apparatus configured to implement a function of the tag may be a tag, or may be an apparatus that can support the tag in implementing the function, for example, a chip system, where the apparatus may be installed in the tag or used in matching with the tag. In embodiments of this application, the chip system may include a chip, or may include a chip and another discrete device. In embodiments of this application, an example in which the apparatus configured to implement the function of the tag is the tag is merely used for description, and constitutes no limitation on the solutions in embodiments of this application.

### 2. Access network device

In embodiments of this application, the access network device may also be referred to as an access device or a network device. The access network device can manage a radio resource, provide an access service to user equipment, and complete forwarding of user equipment data between the user equipment and a core network. The access network device may alternatively be understood as a base station in a network. A reader/writer in embodiments of this application may be deployed in the access network device. In other words, the access network device has a reader/writer capability, namely, a tag inventory capability.

For example, the access network device in embodiments of this application may be any communication device having a wireless transceiver function for communicating with the user equipment. The access network device includes but is not limited to an evolved nodeB (evolved NodeB, eNB), a radio network controller (radio network controller, RNC), a nodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (TRP or TP) in a 5G mobile communication system like an NR system, or one antenna panel or one group of antenna panels (including a plurality of antenna panels) of a base station in the 5G mobile communication system, or may be a network node, for example, a baseband unit (BBU) or a distributed unit (distributed unit, DU), that constitutes a gNB or a transmission point.

In some deployments, the access network device may be a device including a CU or a DU, a device including a CU and a DU, or a device including a CU-control plane (central unit-control plane (central unit-control plane, CU-CP)) node, a CU-user plane (central unit-user plane (central unit-user plane, CU-UP)) node, and a DU node. For example, the access network device may include a gNB-CU-CP, a gNB-CU-UP, and a gNB-DU. The CU (or a CU-CP and a CU-UP) implements some functions of the access network device, and the DU implements some functions of the access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, and an AAU node. In addition, the CU may be classified as an access network device in an access network, or the CU may be classified as an access network device in the core network (core network, CN). This is not limited in this application.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one unit of the CU (or the CU-CP and the CU-UP), the DU, and the RU in this application may be implemented by using a software module, a hardware module, or a combination of a software module and a hardware module.

It should be noted that an apparatus configured to implement a function of the access network device may be an access network device, or may be an apparatus that can support the access network device in implementing the function, for example, a chip system, a hardware circuit, a software module, or a combination of a hardware circuit and a software module, where the apparatus may be installed in the access network device or used in matching with the access network device. In embodiments of this application, an example in which the apparatus configured to implement the function of the access network device is the access network device is merely used for description, and constitutes no limitation on the solutions in embodiments of this application.

The access network device and/or the tag may be deployed on the land, including an indoor device, an outdoor device, a handheld device, or a vehicle-mounted device; may be deployed on the water; or may be deployed on an airplane, a balloon, and a satellite in the air. Scenarios in which the access network device and the tag are located are not limited in embodiments of this application. In addition, the tag and the access network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the tag and the access network device are not limited in this application.

In addition, to support an artificial intelligence (artificial intelligence, AI) technology in a wireless network, an AI node may be further introduced in the network. Optionally, the AI node may be deployed at one or more of the following positions in the communication system: an access network device, a tag, a core network element, or the like. Alternatively, the AI node may be independently deployed, for example, deployed at a position other than any one of the foregoing devices, for example, a host or a cloud server in an over the top (over the top, OTT) system. The AI node may communicate with another device in the communication system. The another device may be, for example, one or more of the following: an access network device, a tag, a core network element, or the like.

### 3. TMF

The TMF is mainly responsible for tag management, for example, tag inventory and access management. The TMF may be an independent network element, or may be integrated with, in other words, deployed together with another network element, for example, integrated with an access and mobility management function (access and mobility management function, AMF) network element, a user plane (user plane function, UPF), the UDM, or the UDR. The TMF being integrated with the AMF, the UPF, the UDM, the UDR, or the like may be understood as that improving another network element causes the network element to have the function of the TMF, for example, improving the AMF, the UPF, the UDM, or the UDR causes the AMF, the UPF, the UDM, or the UDR to have the function of the TMF; or may be understood as that the TMF may further have a function of the AMF, the UPF, the UDM, the UDR, or the like in addition to the function of tag management, for example, tag inventory and access management. For example, the TMF may undertake a mobility management function for a tag, a user data transfer function for a tag, a mobility management function for a tag, a unified data management function for a tag, a data buffering function for a tag, or the like.

### 4. AF

The AF may be an application function of a third party or an operator, and is an interface for a mobile communication system to obtain external application data, and is mainly for transferring a requirement of an application side on a network side.

### 5. NEF

The NEF is mainly for exposing services and capabilities of a 3rd generation partnership project (3rd Generation Partnership Project, 3GPP) network function to the AF, and may also cause the AF to provide information to the 3GPP network function. The NEF is an optional network element.

### 6. UDM

The UDM is mainly for generation of 3GPP authentication and key agreement (Authentication and Key Agreement, AKA) credentials, user ID handling, and unified management on data related to functions such as subscription information-based access authorization, serving network function (network function, NF) registration management, and subscription information management. The UDM is an optional network element. For example, the TMF may undertake the tag unified data management function.

### 7. UDR

The UDR is mainly for storage and retrieval of subscription data by the UDM, storage and retrieval of policy data by a policy control function (Policy Control Function, PCF) network element, storage of structured data for capability exposure, and storage of application data for application detection. The UDM is an optional network element. For example, the TMF may undertake the tag data buffering function.

In the network architecture shown in FIG. 1, interfaces may exist between the network elements for communication. The interfaces between the network elements may be physical interfaces, logical interfaces, or protocol interfaces, or may be service-based interfaces. This is not limited in this application.

It should be understood that the network architecture shown above is merely an example for description, and the network architecture applicable to embodiments of this application is not limited thereto. Any network architecture that can implement functions of the foregoing network elements is applicable to embodiments of this application.

It should be further understood that the functions or the network elements, such as the TMF, the NEF, the UDM, the UDR, and the AF shown in FIG. 1 may be understood as network elements configured to implement different functions, and for example, may be combined as required to form a network slice. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the foregoing network elements are not limited in this application.

It should be further understood that the foregoing names are defined merely for ease of distinguishing between different functions, and should not constitute any limitation on this application. This application does not exclude a possibility that another name is used in a 6G network and another future network. For example, in the 6G network, a part or all of the foregoing network elements may still use terms in 5G, or may use other names.

FIG. 2 is a schematic flowchart of tag sensor data collection and reading.

Step 201: An AF sends a data request message to a TMF. Correspondingly, the TMF receives the data request message from the AF.

The data request message is for notifying the TMF to read sensor data of a tag. The data request message usually carries information related to data reading. The information related to data reading may include one or more of area information for data reading, a range of tag identifiers, or a tag type. The tag identifier is information that can uniquely determine an identifier, for example, a tag identifier (tag identifier, TID) or an electronic product code (electronic product code, EPC).

Step 202: The TMF sends an inventory request message to a reader/writer based on the data request message. Correspondingly, the reader/writer receives the inventory request message from the TMF.

The inventory request message is for requesting the reader/writer to inventory the tag. The inventory request message may carry information about a to-be-inventoried tag, for example, a range of tag identifiers and a tag type.

The TMF may send the inventory request message to one or more readers/writers. The one or more readers/writers may be determined based on the area information for data reading carried in the data request message.

It should be noted that the reader/writer is a device configured to read information in the tag and/or write information into the tag. The reader/writer may also be referred to as a card reader, a read/write device, a read apparatus, a scanner, a read head, a communicator, a reader, an interpreter, a device having a read function and/or a write function, or the like. The reader/writer may be integrated into an access network device, a relay device, a terminal device, or the like, or may be a dedicated reader/writer. This is not limited.

Step 203: The reader/writer sends an excitation signal to a tag in coverage of the reader/writer based on the inventory request message. Correspondingly, the tag in the coverage of the reader/writer receives the excitation signal sent by the reader/writer, so that the tag is powered. After being powered, the tag has energy to send information or data to the reader/writer.

Step 204: The reader/writer sends a selection command to the tag in the coverage of the reader/writer. Correspondingly, the tag in the coverage of the reader/writer receives the selection command sent by the reader/writer.

The selection command is for selecting the to-be-inventoried tag.

For example, the selection command may include a condition that needs to be met by the tag, and the to-be-inventoried tag is a tag that meets the condition in the selection command. In this way, after receiving the selection command, the tag in the coverage of the reader/writer may perform matching, to determine whether the tag meets the condition in the selection command. The selection command is for selecting, based on the range of tag IDs, one or more tags in the range. The one or more tags successfully match the range of tag identifiers in step 201, that is, an identifier of the one or more tags falls within the range of tag identifiers. The tag ID may be the EPC code of the tag, the TID of the tag, or another ID of the tag, to uniquely identify the tag. By using an example in which the selection command carries the TID range, a tag may determine whether a value in a TID storage area of the tag is in the TID range. If the value in the TID storage area of the tag is in the TID range, the tag is selected, in other words, the matching succeeds, and the tag belongs to the to-be-inventoried tag. If the value in the TID storage area of the tag is not in the TID range, the tag is not selected, in other words, the matching fails, and the tag does not belong to the to-be-inventoried tag.

Step 205: The tag performs matching based on the selection command, and performs a random access procedure with the reader/writer when the matching succeeds.

A specific implementation of random access is not limited in this embodiment of this application. In a possible implementation, the reader/writer sends a query command (query) to the tag. The query command may carry a Q value, where the Q value is used by the tag to randomly generate a random value in a range of (0, 2^Q-1) based on a probability. After receiving the query command, the tag generates the random value based on the probability. The tag with a random value of 0 returns, to the reader/writer, a random number RN16 generated by the tag. After receiving the random number, the reader/writer returns an acknowledgement (acknowledgement, ACK) command to the tag, where the ACK command may carry the random number. The tag compares the sent random number with a received random number. If the two random numbers are consistent, the tag successfully performs random access. The query command may alternatively be a query repetition command (QueryRep) or a query adjustment command (QueryAdjust).

Step 206: The tag that successfully performs random access sends a registration request message to the TMF through the reader/writer. Correspondingly, the TMF receives the registration request message from the tag.

The registration request message is for registering with the TMF, and the registration request message carries the tag identifier.

Optionally, step 207: The tag that successfully performs random access performs a security authentication procedure with the TMF.

Step 208: The TMF sends a registration accept message to the tag through the reader/writer. Correspondingly, the tag receives the registration accept message from the TMF. The registration accept message indicates that the registration succeeds.

If the tag performs the security authentication procedure with the TMF, the TMF sends the registration accept message to the tag when security authentication succeeds.

Step 209: The TMF sends a data reading request message to the tag through the reader/writer. Correspondingly, the tag receives the data reading request message from the TMF. The data reading request message may be for requesting to read the sensor data of the tag.

Step 210: The tag collects the sensor data based on the data reading request message.

Step 211: After completing the collection of the sensor data, the tag sends a data reading response message to the TMF through the reader/writer. Correspondingly, the TMF receives the data reading response message from the tag. The data reading response message includes the sensor data collected by the tag.

Step 212: The TMF sends the tag identifier and the corresponding sensor data to the AF. Correspondingly, the AF receives the tag identifier and the sensor data from the TMF.

It can be learned from the procedure shown in FIG. 2 that, the collection of the sensor data performed by the tag is controlled based on a command of the TMF, that is, the tag starts the collection of the sensor data only after receiving the data reading request message from the TMF. However, it takes time to collect the sensor data. If all to-be-inventoried tags start collection of sensor data after receiving the data reading request message, efficiency of obtaining the sensor data by the AF is very low.

For the foregoing problem, this application provides a data collection method and a communication apparatus, to improve efficiency of obtaining sensor data of a tag by a network.

The following describes method embodiments of this application.

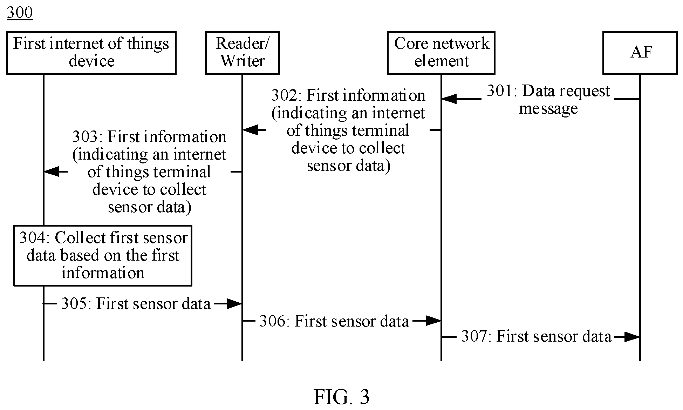

FIG. 3 is a schematic flowchart of a data collection method 300 according to this application.

The method 300 may be performed by an internet of things device, a reader/writer, a core network element, and an AF. Unless otherwise specified, the "internet of things device", the "reader/writer", the "core network element", or the "AF" may be the internet of things device, the reader/writer, the core network element, or the AF, or may be an apparatus that can support the internet of things device, the reader/writer, the core network element, or the AF in implementing a function. For ease of description, the following uses the internet of things device, the reader/writer, the core network element, or the AF for description.

The internet of things device may be the tag described above. The core network element is a network element responsible for managing the internet of things device, for example, the TMF described above. The reader/writer may be integrated into an access network device, a relay device, a terminal device, or the like, or may be a dedicated reader/writer. This is not limited.

The method 300 includes at least a part of the following content.

Step 301: The AF sends a data request message to the core network element. Correspondingly, the core network element receives the data request message from the AF.

The data request message is for requesting sensor data of a to-be-inventoried internet of things device, or notifies the core network element to read the sensor data of the to-be-inventoried internet of things device. The data request message usually carries information related to data reading. The information related to data reading may include one or more of area information for data reading, a range of internet of things device identifiers, or an internet of things device type. For example, the internet of things device is a tag, and a tag identifier is information that can uniquely determine an identifier, for example, a TID or an EPC.

Step 302: The core network element sends first information to the reader/writer based on the data request message. Correspondingly, the reader/writer receives the first information from the core network element.

The first information indicates a first internet of things device to collect sensor data. The first internet of things device belongs to the to-be-inventoried internet of things device.

A manner in which the core network element sends the first information is not limited in this embodiment of this application.

In a possible implementation, the first information may be carried in downlink signaling that is sent before the first internet of things device registers with the core network element. "Before the first internet of things device registers with the core network element" may include: before the first internet of things device sends a registration request message and in a process in which the first internet of things device registers with the core network element. In other words, the first information may be carried in the downlink signaling that is before the registration request message or the downlink signaling that is in the process in which the first internet of things device registers with the core network element.

The downlink signaling before the registration request message includes a first inventory request message. The first inventory request message is for requesting the reader/writer to inventory the to-be-inventoried internet of things device, and the first inventory request message may carry information about the to-be-inventoried internet of things device, for example, the range of internet of things device identifiers and the internet of things device type. The downlink signaling in the process in which the first internet of things device registers with the core network element includes at least one of the following: a first registration message or downlink signaling in a first security authentication process. The first registration message indicates that the first internet of things device has successfully registered with the core network element. For example, the first registration message may be a registration accept message or a registration response message. The first security authentication process is a process in which the first internet of things device performs security authentication with the core network element. For example, the downlink signaling in the first security authentication process may include an authentication success message and/or an authentication request message, where the authentication success message indicates that the security authentication on the first internet of things device succeeds, and the authentication request message includes a security material for security authentication. This helps the first internet of things device perform authentication on the core network element.

In addition, the core network element may send an inventory request message to one or more readers/writers. The one or more readers/writers may be determined based on area information for data collection carried in a data collection request message. The following uses one of the one or more readers/writers as an example for description.

Step 303: After receiving the first information, the reader/writer sends the first information to the first internet of things device. Correspondingly, the first internet of things device receives the first information from the reader/writer.

The first information indicates the first internet of things device to collect the sensor data.

A manner in which the reader/writer sends the first information is not limited in this embodiment of this application.

In a possible implementation, the first information is carried in the downlink signaling that is sent before the first internet of things device registers with the core network element. For descriptions of "before the first internet of things device registers with the core network element", refer to step 303.

In step 303, the downlink signaling before the registration request message includes at least one of the following: a first excitation signal, a first selection command, and downlink signaling in a first random access procedure. The first excitation signal is for powering the to-be-inventoried internet of things device. In a manner, the first excitation signal is a background carrier. The first selection command is for selecting the to-be-inventoried internet of things device. The first random access procedure is a process in which the first internet of things device accesses the reader/writer. For example, the downlink signaling in the first random access procedure includes one or more of a query command, a query repetition command, a query adjustment command, or an acknowledgement command. The downlink signaling in the process in which the first internet of things device registers with the core network element includes at least one of the following: the first registration message or the downlink signaling in the first security authentication process. The first registration message includes the registration accept message or the registration response message. The downlink signaling in the first security authentication process includes the authentication success message and/or the authentication request message.

In an example, when the core network element sends the first information by using the first inventory request message, the reader/writer may include, based on the first inventory request message, the first information in the first excitation signal, the first selection command, or the downlink signaling in the first random access procedure, so that the first internet of things device collects, after receiving the first information, the sensor data based on the first information. The first excitation signal, the first selection command, and the downlink signaling in the first random access procedure are simultaneously sent to a to-be-inventoried internet of things device in a range of the reader/writer. When there are a plurality of to-be-inventoried internet of things devices, the plurality of internet of things devices each collect sensor data based on the first information.

In another example, when the core network element sends the first information by using the first registration message or the downlink signaling in the first security authentication process, correspondingly, the reader/writer may send the first information to the first internet of things device by using the first registration message or the downlink signaling in the first security authentication process. Because signaling exchange in the registration process or the security authentication process is between the first internet of things device and a network (for example, the reader/writer or the core network element), the first internet of things device that receives the first registration message or the downlink signaling in the first security authentication process collects the sensor data based on the first information. For example, after randomly accessing the reader/writer, the first internet of things device starts the registration process or the first security authentication process, then receives the first registration message or the downlink signaling in the first security authentication process, and collects the sensor data based on the first information in the first registration message or the downlink signaling in the first security authentication process.

Step 304: The first internet of things device collects first sensor data based on the first information.

Step 305: The first internet of things device sends the first sensor data to the reader/writer. Correspondingly, the reader/writer receives the first sensor data from the first internet of things device.

A manner in which the first internet of things device sends the first sensor data is not limited in this embodiment of this application.

In a possible implementation, when the first information is carried in the first excitation signal, the first selection command, or the downlink signaling in the first random access procedure, the first sensor data may be carried in a second registration message, uplink signaling in the first security authentication process, or uplink signaling related to service transmission. The second registration message is for requesting to register with the core network element. For example, the second registration message is a registration request message.

In an example, after successfully performing random access, the first internet of things device also completes the collection of the first sensor data, and the first internet of things device may include the first sensor data in the second registration message. This manner is applicable to a case in which the first internet of things device and the core network element do not need security authentication, or is applicable to a case in which the first internet of things device and the core network element need security authentication. This is not limited. The case in which the first internet of things device and the core network element do not need security authentication may mean that, in current inventory, the first internet of things device and the core network element do not need security authentication. For example, in a previous inventory process, the first internet of things device has ever registered with the core network element and has completed security authentication with the core network element, and the core network element still retains related information about the first internet of things device. In this case, when the first internet of things device is inventoried again, a security authentication process may not be performed. The case in which the first internet of things device and the core network element do not need security authentication may alternatively mean that security authentication is not needed for the first internet of things device and the core network element.

In another example, after successfully performing random access, the first internet of things device completes the collection of the first sensor data in the first security authentication process. In this case, the first internet of things device may include the first sensor data in the uplink signaling (for example, the authentication request message or the authentication success message) in the first security authentication process.

In another example, the first internet of things device completes the collection of the first sensor data after the registration process. In this case, the first internet of things device may include the first sensor data in the uplink signaling related to service transmission.

In another possible implementation, when the first information is carried in the first registration message or the downlink signaling in the first security authentication process, the first sensor data may be carried in uplink signaling related to service transmission.

Step 306: The reader/writer sends the first sensor data to the core network element. Correspondingly, the core network element receives the first sensor data from the reader/writer.

A manner in which the reader/writer sends the first sensor data is not limited in this embodiment of this application. A manner in which the reader/writer transmits the first sensor data corresponds to a manner in which the first internet of things device transmits the first sensor data. For example, the reader/writer forwards, to the core network element, signaling that is received from the first internet of things device and that carries the first sensor data. For example, after the first internet of things device uses the second registration message, the uplink signaling in the first security authentication process, or the uplink signaling related to service transmission, the reader/writer forwards, to the core network element, the received second registration message, uplink signaling in the first security authentication process, or uplink signaling related to service transmission, to send the first sensor data to the core network element.

Step 307: The core network element sends the first sensor data to the AF. Correspondingly, the AF receives the first sensor data from the core network element.

In the method 300, the core network element and the reader/writer may send the first information to the first internet of things device by using the downlink signaling that is sent before the first internet of things device registers with the core network element, to indicate the first internet of things device to collect the sensor data. In this way, the first internet of things device may start the collection of the sensor data before registering with the core network element. In comparison with starting the collection of the sensor data based on a data reading request message from the core network element after the registration succeeds, the first internet of things device starts the collection of the sensor data before registering with the core network element. This helps advance time at which the first internet of things device reports the sensor data, thereby improving efficiency of obtaining the sensor data of the internet of things device by the core network element.

In addition, when the core network element sends the first information by using the first inventory request message, the reader/writer may include, based on the first inventory request message, the first information in the first excitation signal, the first selection command, or the downlink signaling in the first random access procedure. In this way, each to-be-inventoried internet of things device in the range of the reader/writer may collect sensor data in advance based on the first information. In this way, time at which each to-be-inventoried internet of things device reports the sensor data is advanced, thereby further improving efficiency of obtaining the sensor data of the internet of things device by the core network element.

In this embodiment of this application, the first internet of things device may actively report the first sensor data after completing the collection of the first sensor data, or may report, based on a reporting indication from the core network element, the first sensor data after completing the collection of the first sensor data. For a case in which the first internet of things device reports the first sensor data based on the reporting indication, the core network element may further send second information to the reader/writer, where the second information indicates the first internet of things device to report sensor data; after receiving the second information, the reader/writer may send the second information to the first internet of things device; and the first internet of things device may report the first sensor data based on the received second information. The second information and the first information may be carried in same signaling, or may be carried in different signaling. This is not limited. For example, both the first information and the second information are carried in the first registration message. For another example, the first information is carried in the first excitation signal, the first selection command, the downlink signaling in the first random access procedure, or the downlink signaling in the first security authentication process, and the second information is carried in the first registration message.

In this embodiment of this application, for a case in which the first internet of things device reports the first sensor data based on the reporting indication, the core network element may further send third information to the reader/writer, where the third information indicates the first internet of things device to send feedback information when the collection of the sensor data is not completed, and the feedback information indicates to maintain a communication connection to the first internet of things device; and after receiving the third information, the reader/writer may send the third information to the first internet of things device. Subsequently, if the first internet of things device has not completed the collection of the first sensor data when receiving the second information, the first internet of things device may send the feedback information to the reader/writer, and the reader/writer may maintain the communication connection to the first internet of things device based on the received feedback information. The reader/writer may further send the feedback information to the core network element, so that the core network element maintains a communication connection to the first internet of things device based on the received feedback information. In this way, before completing the collection of the first sensor data, the first internet of things device keeps maintaining the communication connection to a network side. Once the collection of the first sensor data is completed, the first internet of things device may report the first sensor data to the core network element in time. This helps improve efficiency of obtaining the sensor data by the core network element.

The third information and the first information may be carried in same signaling, or may be carried in different signaling. This is not limited. For example, both the first information and the third information are carried in the first registration message. For another example, the first information is carried in the first excitation signal, the first selection command, the downlink signaling in the first random access procedure, or the downlink signaling in the first security authentication process, and the third information is carried in the first registration message.

In addition, before completing the collection of the first sensor data, the first internet of things device may send one or more pieces of feedback information. Optionally, the third information further indicates a periodicity for sending the feedback information. In this way, the first internet of things device may periodically send the feedback information based on the periodicity indicated by the third information, to maintain the communication connection to the network side.

In this embodiment of this application, for the first internet of things device, the network side may maintain a timer. During running of the timer, the network side maintains the communication connection to the first internet of things device. After the timer times out, the network side disconnects the communication connection to the first internet of things device, and starts to inventory a next internet of things device. In this case, if completing the collection of the first sensor data after the timer times out, the first internet of things device performs a random access procedure and a registration process, to re-establish a communication connection to the network side, and transmit the first sensor data on the newly established communication connection. In this way, long-time waiting for an internet of things device to report sensor data can be avoided. This helps another internet of things device access the network in time, and helps improve efficiency of obtaining the sensor data by the core network element.

In an example, the core network element maintains the foregoing timer. For example, after sending the second information or the first information, the core network element starts a first timer, where timing duration of the first timer is first duration. If receiving the first sensor data from the reader/writer in the first duration, the core network element sends fifth information to the reader/writer after receiving the first sensor data, where the fifth information indicates to inventory the next internet of things device. Correspondingly, the reader/writer starts to inventory the next internet of things device based on the fifth information. If not receiving the first sensor data from the reader/writer in the first duration, the core network element disconnects the communication connection to the first internet of things device, and sends the fifth information to the reader/writer, where the fifth information indicates to inventory the next internet of things device. Correspondingly, the reader/writer starts to inventory the next internet of things device based on the fifth information.

In another example, the reader/writer maintains the foregoing timer. For example, after receiving the second information or the first information, the reader/writer starts a first timer, where timing duration of the first timer is first duration. If receiving the first sensor data in the first duration, the reader/writer may send sixth information to the core network element after sending the first sensor data to the core network element, where the sixth information is for requesting to inventory the next internet of things device. Correspondingly, the core network element sends fifth information to the reader/writer based on the sixth information, where the fifth information indicates to inventory the next internet of things device. If not receiving the first sensor data in the first duration, the reader/writer disconnects the communication connection to the first internet of things device, and sends the sixth information to the core network element, where the sixth information is for requesting to inventory the next internet of things device. Correspondingly, the core network element disconnects the communication connection to the first internet of things device based on the sixth information, and sends the fifth information to the reader/writer, where the fifth information indicates to inventory the next internet of things device.

Optionally, the network side may also provide the first duration of the timer to the first internet of things device. For example, the reader/writer or the core network element sends fourth information to the first internet of things device, where the fourth information indicates the first duration. In this way, when completing the collection of the first sensor data in the first duration, the first internet of things device directly reports the first sensor data. When completing the collection of the first sensor data after the first duration, the first internet of things device re-establishes the communication connection to the network side, and reports the first sensor data on the established communication connection. The fourth information and the first information may be carried in same signaling, or may be carried in different signaling. This is not limited. For example, both the first information and the fourth information are carried in the first registration message. For another example, the first information is carried in the first excitation signal, the first selection command, the downlink signaling in the first random access procedure, or the downlink signaling in the first security authentication process, and the fourth information is carried in the first registration message.

In this embodiment of this application, the data request message sent by the AF to the core network element may further include periodicity information, where the periodicity information indicates a periodicity for inventorying the to-be-inventoried internet of things device. In this way, the core network element may periodically inventory the to-be-inventoried internet of things device based on the periodicity information.

In a possible implementation, in a first periodicity, the core network element sends the first information to the first internet of things device, and receives the first sensor data reported by the first internet of things device. In a next inventory periodicity (denoted as a second periodicity), the core network element starts a new round of inventory procedure. The inventory procedure in the second periodicity is the same as an inventory procedure in the first periodicity. For example, the core network element sends, in the second periodicity based on the periodicity information, the first information to the reader/writer again by using a second inventory request message or a fourth registration message, where the fourth registration message indicates that the first internet of things device has successfully registered with the core network element. After receiving the first information, the reader/writer sends the first information to the first internet of things device by using a second excitation signal, a second selection command, downlink signaling in a second random access procedure, the fourth registration message, or downlink signaling in a second security authentication process. For descriptions of the second inventory request message, the fourth registration message, the second excitation signal, the second selection command, the downlink signaling in the second random access procedure, or the downlink signaling in the second security authentication process, refer to those of the first inventory request message, the first registration message, the first excitation signal, the first selection command, the downlink signaling in the first random access procedure, or the downlink signaling in the first security authentication process.

In another possible implementation, in a first periodicity, the core network element sends the first information to the first internet of things device, receives the first sensor data reported by the first internet of things device, and sends, after receiving the first sensor data, the first information to the first internet of things device through the reader/writer. After receiving the first information, the first internet of things device may collect second sensor data. In a next inventory periodicity (denoted as a second periodicity), the core network element sends second information to the reader/writer by using a second inventory request message, where the second information indicates the first internet of things device to report sensor data; after receiving the second inventory request, the reader/writer sends the second information to the first internet of things device by using a second excitation signal, a second selection command, or downlink signaling in a second random access procedure; after receiving the second information, the first internet of things device sends a third registration message based on the second information, where the third registration message is for requesting to register with the core network element, and the third registration message includes the second sensor data; the reader/writer sends the third registration message to the core network element; and after receiving the third registration message, the core network element sends the first information to the first internet of things device through the reader/writer. In this manner, in one periodicity, after receiving corresponding sensor data, the core network element may indicate the first internet of things device to collect sensor data again. In this way, in a next periodicity, the core network element may directly indicate the first internet of things device to report the second sensor data collected in advance. This helps improve efficiency of obtaining the sensor data by the core network element.

It should be noted that, in the foregoing manner, the core network element may not send the second information to the first internet of things device, but the first internet of things device actively reports the second sensor data. For example, in the second periodicity, after receiving a registration accept message or a registration response message, the first internet of things device may directly report the collected second sensor data.

It should be further noted that a manner in which the first internet of things device collects sensor data based on the newly received first information after sending the first sensor data is not limited in this embodiment of this application. For example, the first internet of things device may keep collecting sensor data and keep updating the sensor data. For another example, the first internet of things device may keep collecting sensor data and buffer all sensor data. For another example, the first internet of things device may collect sensor data once and buffer the sensor data.

In this embodiment of this application, the data request message sent by the AF to the core network element may further include a first data amount, where the first data amount is a data amount for triggering the core network element to report sensor data to the AF. For example, when first sensor data of 50 tags is collected, the TMF centrally sends the first sensor data of the 50 tags to the AF. In this case, that the core network element sends the first sensor data to the application function network element may include: When sensor data buffered in the core network element reaches the first data amount, the core network element sends the sensor data buffered in the core network element to the AF, where the sensor data buffered in the core network element includes the first sensor data.

In this embodiment of this application, the data request message sent by the AF to the core network element may further include indication information, where the indication information indicates signaling that carries the first information. In this case, that the core network element sends the first information to the reader/writer based on the data request message includes: The core network element sends, based on the data request message, the first information to the reader/writer in the signaling indicated by the indication information.

In this embodiment of this application, the core network element may further report only updated sensor data to the AF. For example, in the first periodicity, the sensor data reported by the first internet of things is data A, and in the second periodicity, the sensor data reported by the first internet of things is data B. In comparison with the data B, only a first part of the data A is updated. In this case, the core network element may report a first part of the data B to the AF.

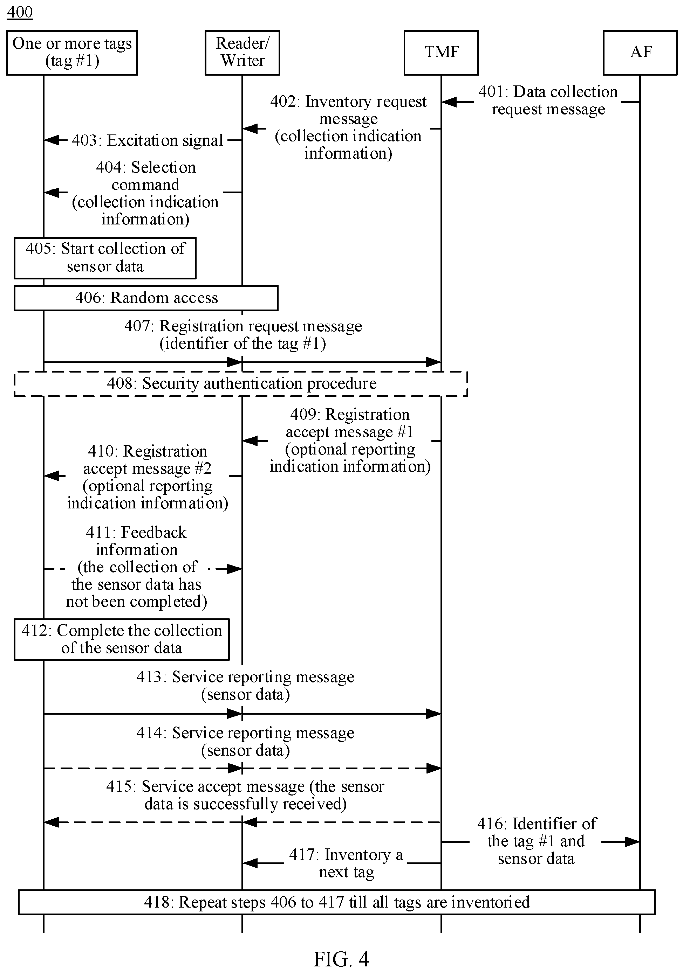

With reference to FIG. 4, the following describes in detail the technical solutions in this application by using an example in which first information is carried in an inventory request message and a selection command, and sensor data is carried in uplink signaling related to a service.

A tag, a TMF, collection indication information, a service reporting message, a data collection request message, and reporting indication information in FIG. 4 may respectively correspond to the internet of things device, the core network element, the first information, the uplink signaling related to the service, the data request message, and the second information in the method 300.

FIG. 4 is a schematic flowchart of a data collection method 400 according to this application.

Step 401: An AF sends a data request message to the TMF. Correspondingly, the TMF receives the data request message from the AF.

The data request message is for notifying the TMF to read sensor data of the tag. For detailed descriptions of step 401, refer to step 301.

Step 402: The TMF sends an inventory request message to a reader/writer based on the data request message. Correspondingly, the reader/writer receives the inventory request message from the TMF.

The inventory request message is for requesting the reader/writer to inventory the tag. The inventory request message may carry information about a to-be-inventoried tag, for example, a range of tag identifiers and a tag type. In addition, during implementation of this application, the inventory request message may further carry the collection indication information, where the collection indication information indicates the tag to collect the sensor data.

The TMF may send the inventory request message to one or more readers/writers. The one or more readers/writers may be determined based on area information for data collection carried in the data collection request message.

Step 403: The reader/writer sends an excitation signal to a tag in coverage of the reader/writer based on the inventory request message. Correspondingly, the tag in the coverage of the reader/writer receives the excitation signal sent by the reader/writer, so that the tag is powered. After being powered, the tag has energy to send information or data to the reader/writer.

In the method 400, a tag #1 is in the coverage of the reader/writer.

Step 404: The reader/writer sends a selection command to the tag in the coverage of the reader/writer. Correspondingly, the tag in the coverage of the reader/writer receives the selection command sent by the reader/writer.

The selection command is for selecting the to-be-inventoried tag.

For example, the selection command may include a condition that needs to be met by the tag, and the to-be-inventoried tag is a tag that meets the condition in the selection command. In this way, after receiving the selection command, the tag in the coverage of the reader/writer may perform matching, to determine whether the tag meets the condition in the selection command. By using an example in which the selection command carries a TID range, a tag may determine whether a value in a TID storage area of the tag is in the TID range. If the value in the TID storage area of the tag is in the TID range, the tag is selected, in other words, the matching succeeds, and the tag belongs to the to-be-inventoried tag. If the value in the TID storage area of the tag is not in the TID range, the tag is not selected, in other words, the matching fails, and the tag does not belong to the to-be-inventoried tag.

In addition, the selection command may further carry the collection indication information, where the collection indication information indicates the tag to collect the sensor data. In this way, after the matching succeeds, the tag may start the collection of the sensor data.

Step 405: The tag performs matching based on the selection command, and immediately starts the collection of the sensor data when the matching succeeds.

If a plurality of tags in the coverage of the reader/writer each successfully perform matching, the plurality of tags each start collection of sensor data.

Step 406: The tag that successfully performs matching performs a random access procedure with the reader/writer.

A specific implementation of random access is not limited in this embodiment of this application. In a possible implementation, the reader/writer sends a query command. The query command may carry a Q value, where the Q value is used by the tag to generate a random value based on a probability. After receiving the query command, the tag that generates a random value of 0 returns a random number RN16 to the reader/writer. After receiving the random number, the reader/writer returns an acknowledgement (acknowledgement, ACK) command to the tag, where the ACK command may carry the random number. The tag compares the sent random number with a received random number. If the two random numbers are consistent, the tag successfully performs random access. The query command may alternatively be a query repetition command or a query adjustment command.

In the method 400, an example in which the tag that successfully performs random access is the tag #1 is used.

Step 407: The tag #1 sends a registration request message to the TMF through the reader/writer. Correspondingly, the TMF receives the registration request message from the tag #1.

The registration request message is for registering with the TMF, and the registration request message carries an identifier of the tag #1.

Optionally, step 408: The tag #1 performs a security authentication procedure with the TMF.

Step 409: The TMF sends a registration accept message #1 to the reader/writer. Correspondingly, the reader/writer receives the registration accept message #1 from the TMF.

The registration accept message #1 indicates that the registration of the tag #1 succeeds.

Optionally, the registration accept message #1 may further carry the reporting indication information, where the reporting indication information indicates the tag #1 to report sensor data.

If the tag performs the security authentication procedure with the TMF, the TMF sends the registration accept message #1 to the tag when security authentication succeeds.

In a possible implementation, the TMF may maintain a timer #1. During running of the timer #1, the TMF maintains a communication connection to the tag #1. After the timer #1 expires or times out, the TMF no longer maintains the communication connection to the tag #1, the TMF may indicate the reader/writer to inventory a next tag, and the reader/writer no longer powers the tag #1. In this case, if the tag #1 intends to communicate with a network side, the tag #1 needs to re-perform a random access procedure. In this way, long-time waiting for a tag to report sensor data can be avoided. This helps another tag access a network in time. Optionally, the TMF may include duration information #1 in the registration accept message #1, where the duration information #1 indicates timing duration of the timer #1. This helps the reader/writer provide the timing duration to the tag #1.

In another possible implementation, the TMF may provide duration information #2 to the reader/writer by using the registration accept message #1, where the duration information #2 indicates duration for maintaining a communication connection to the tag #1, or duration for maintaining communication with the tag #1. In this way, the reader/writer may maintain a timer #2 based on the duration information #2, where timing duration of the timer #2 is duration indicated by the duration information #2. During running of the timer #2, the reader/writer maintains the communication connection to the tag #1, and keeps powering the tag #1. After the timer #2 expires or times out, the reader/writer no longer maintains the communication connection to the tag #1, no longer powers the tag #1, and feeds back to the TMF that a next tag can be inventoried. In this case, if the tag #1 intends to communicate with a network side, the tag #1 needs to re-perform a random access procedure. In this way, long-time waiting for a tag to report sensor data can be avoided. This helps another tag access a network in time.

In another possible implementation, the TMF may include indication information #1 in the registration accept message #1, where the indication information #1 indicates the tag #1 to send feedback information when the collection of the sensor data has not been completed, and the feedback information indicates that the collection of the sensor data has not been completed. In this way, the reader/writer and the TMF may maintain a communication connection to the tag #1 based on the feedback information of the tag #1, and keep powering the tag #1. Optionally, the registration accept message #1 may further carry periodicity information #1, where the periodicity information #1 indicates a periodicity for sending the feedback information.

Step 410: The reader/writer sends a registration accept message #2 to the tag #1. Correspondingly, the tag #1 receives the registration accept message #2 from the reader/writer.

The registration accept message #2 indicates that the registration of the tag #1 succeeds.

Optionally, the registration accept message #2 carries the reporting indication information, where the reporting indication information indicates the tag #1 to report the sensor data.

In a possible implementation, when the registration accept message #1 carries the duration information #1, the reader/writer may include the duration information #1 in the registration accept message #2. This helps the tag #1 report the sensor data based on the duration information #1. For example, the tag #1 completes the collection of the sensor data in the duration indicated by the duration information #1. In this case, the communication connection between the tag #1, and the reader/writer and the TMF still exists, and the tag #1 may directly report the sensor data to the TMF through the reader/writer, without performing random access again. For another example, after the duration indicated by the duration information #1, the tag #1 completes the collection of the sensor data. In this case, the communication connection between the tag #1, and the reader/writer and the TMF does not exist, and the tag #1 needs to perform random access again if the tag #1 intends to report the sensor data, that is, needs to wait for the reader/writer to inventory the tag #1 again.

In another possible implementation, when the registration accept message #1 carries the duration information #2, the reader/writer may maintain the timer #2 based on the duration information #2, where the timing duration of the timer #2 is the duration indicated by the duration information #2. During running of the timer #2, the reader/writer maintains the communication connection to the tag #1, and keeps powering the tag #1. After the timer #2 expires or times out, the reader/writer no longer maintains the communication connection to the tag #1, no longer powers the tag #1, and feeds back to the TMF that the next tag can be inventoried.

Optionally, the reader/writer may provide the duration information #2 to the tag #1 by using the registration accept message #2. This helps the tag #1 report the sensor data based on the duration information #2. For example, the tag #1 completes the collection of the sensor data in the duration indicated by the duration information #2. In this case, the communication connection between the tag #1, and the reader/writer and the TMF still exists, and the tag #1 may directly report the sensor data to the TMF through the reader/writer, without performing random access again. For another example, after the duration indicated by the duration information #2, the tag #1 completes the collection of the sensor data. In this case, the communication connection between the tag #1, and the reader/writer and the TMF does not exist, and the tag #1 needs to perform random access again if the tag #1 intends to report the sensor data, that is, needs to wait for the reader/writer to inventory the tag #1 again.

In another possible implementation, when the registration accept message #1 carries the indication information #1, the reader/writer may include the indication information #1 in the registration accept message #2, where the indication information #1 indicates the tag #1 to send the feedback information when the collection of the sensor data has not been completed. Optionally, the registration accept message #2 may further carry periodicity information #2, where the periodicity information #2 indicates a periodicity for sending the feedback information. When the registration accept message #1 carries the periodicity information #1, the periodicity information #2 may be determined based on the periodicity information #1. For example, the periodicity information #2 is the same as the periodicity information #1. The reader/writer may alternatively determine the periodicity information #2 based on the reader/writer.

Optionally, step 411: When the registration accept message #2 carries the indication information #1 and the tag #1 has not completed the collection of the sensor data, the tag #1 sends the feedback information to the reader/writer. In other words, the reader/writer receives the feedback information from the tag #1. The feedback information indicates that the collection of the sensor data has not been completed.

The tag #1 may send one or more pieces of feedback information to the reader/writer, to maintain the communication connection between the tag #1 and the reader/writer before the collection of the sensor data is completed. In a possible implementation, if the registration accept message #2 carries the periodicity information #2, the tag #1 may send the feedback information based on the periodicity indicated by the periodicity information #2.

Step 412: The tag #1 completes the collection of the sensor data.

Step 413: The tag #1 sends a service reporting message to the TMF through the reader/writer. Correspondingly, the TMF receives the service reporting message from the tag. The service reporting message includes the sensor data.

In a possible implementation, when the registration accept message #2 carries the reporting indication information, the tag #1 may report the sensor data based on the reporting indication information. When the registration accept message #2 does not carry the reporting indication information, the tag #1 determines that the collected sensor data needs to be reported.

In a possible implementation, when the registration accept message #2 carries the duration information #1 or the duration information #2, the tag #1 may report the sensor data based on the duration information #1 or the duration information #2. For example, the tag #1 completes the collection of the sensor data in the duration indicated by the duration information #1 or the duration information #2. In this case, the communication connection between the tag #1, and the reader/writer and the TMF still exists, and the tag #1 may directly report the sensor data to the TMF through the reader/writer, without performing random access again. For another example, after the duration indicated by the duration information #1 or the duration information #2, the tag #1 completes the collection of the sensor data. In this case, the communication connection between the tag #1, and the reader/writer and the TMF does not exist, and the tag #1 needs to perform random access again if the tag #1 intends to report the sensor data, that is, needs to wait for the reader/writer to inventory the tag #1 again. FIG. 4 shows the case in which the tag #1 completes the collection of the sensor data in the duration indicated by the duration information #1 or the duration information #2.

Optionally, step 414: If the tag #1 does not receive, in preset time, a service accept message that indicates that the sensor data is successfully received, the tag #1 may send the service reporting message to the TMF again through the reader/writer, where the service reporting message includes the sensor data.

Optionally, step 415: The TMF sends, to the tag #1 through the reader/writer, the service accept message that indicates that the sensor data is successfully received. Correspondingly, the tag #1 receives the service accept message from the TMF.

Step 416: After receiving the sensor data from the tag #1, the TMF sends the identifier of the tag #1 and the corresponding sensor data to the AF. Correspondingly, the AF receives the identifier of the tag #1 and the sensor data from the TMF.

Step 417: The TMF sends a command of inventorying a next tag to the reader/writer. Correspondingly, the reader/writer receives the command from the TMF.

Step 418: Repeat steps 406 to 417, till all tags are inventoried.

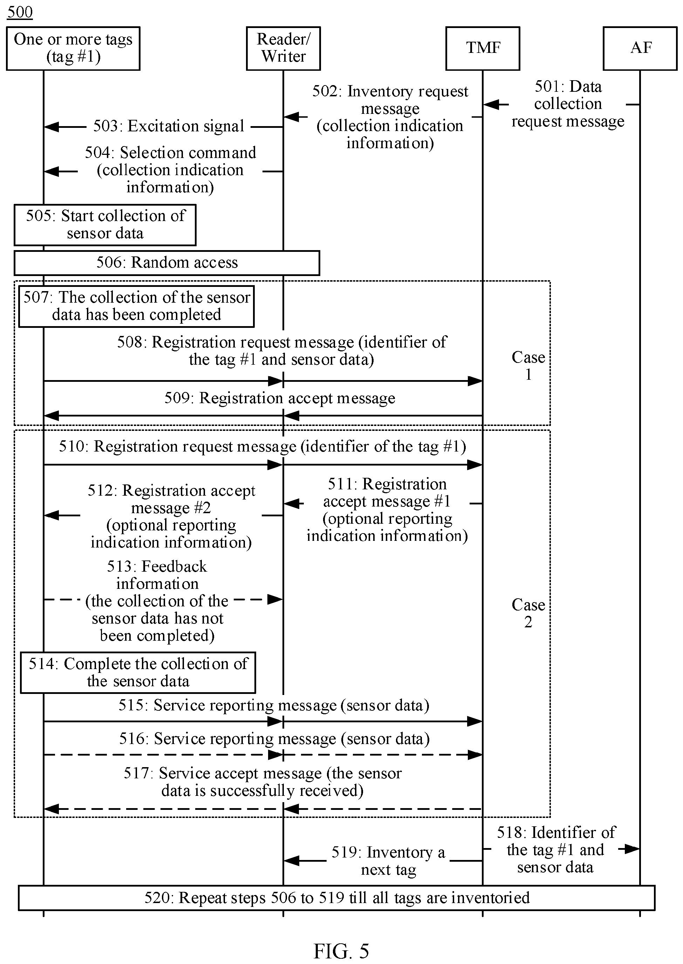

With reference to FIG. 5, the following describes in detail the technical solutions in this application by using an example in which first information is carried in an inventory request message and a selection command, and sensor data is carried in a registration request message.

A tag, a TMF, collection indication information, a service reporting message, a data collection request message, and reporting indication information in FIG. 5 may respectively correspond to the internet of things device, the core network element, the first information, the uplink signaling related to a service, the data request message, and the second information in the method 300.

FIG. 5 is a schematic flowchart of a data collection method 500 according to this application.

Step 501: An AF sends the data collection request message to the TMF. Correspondingly, the TMF receives the data collection request message from the AF. The data collection request message is for notifying the TMF to read data of the tag.

Step 502: The TMF sends an inventory request message to a reader/writer based on the data collection request message. Correspondingly, the reader/writer receives the inventory request message from the TMF. The inventory request message is for requesting the reader/writer to inventory the tag. The inventory request message may carry information about a to-be-inventoried tag, for example, a range of tag identifiers and a tag type. In addition, the inventory request message may further carry the collection indication information, where the collection indication information indicates the tag to collect the sensor data. For step 502, refer to step 402. Details are not described again.

Step 503: The reader/writer sends an excitation signal to a tag in coverage of the reader/writer based on the inventory request message. Correspondingly, the tag in the coverage of the reader/writer receives the excitation signal sent by the reader/writer, so that the tag is powered.

Step 504: The reader/writer sends a selection command to the tag in the coverage of the reader/writer. Correspondingly, the tag in the coverage of the reader/writer receives the selection command sent by the reader/writer. The selection command is for selecting the to-be-inventoried tag. In addition, the selection command may further carry the collection indication information, where the collection indication information indicates the tag to collect the sensor data.

Step 505: The tag performs matching based on the selection command, and immediately starts the collection of the sensor data when the matching succeeds.

Step 506: The tag that successfully performs matching performs a random access procedure with the reader/writer.

For steps 501 to 506, refer to steps 401 to 406. Details are not described again.

In the method 500, an example in which the tag that successfully performs random access is a tag #1 is used.

When the tag #1 completes the random access, two cases may occur based on whether the tag #1 completes the collection of the sensor data. The following separately describes the two cases.

Case 1: When the tag #1 completes the random access, the tag #1 has completed the collection of the sensor data.

In this case, steps 507 to 509 may be performed.

Step 507: The tag #1 has completed the collection of the sensor data.

A specific moment at which the tag #1 completes the collection of the sensor data is not limited in this embodiment of this application, provided that the tag is in a state in which the collection of the sensor data is completed when the tag #1 completes the random access. For example, the tag #1 completes the collection of the sensor data in a random access procedure. For another example, the tag #1 completes the collection of the sensor data after the random access procedure and before a registration request message is sent.

Step 508: The tag #1 sends the registration request message to the TMF through the reader/writer. Correspondingly, the TMF receives the registration request message from the tag #1.

The registration request message is for registering with the TMF, and the registration request message carries an identifier of the tag #1 and the sensor data.

Step 509: The TMF sends a registration accept message to the tag #1 through the reader/writer. Correspondingly, the tag receives the registration accept message from the TMF.

The registration accept message indicates that the registration of the tag #1 succeeds and the sensor data is successfully received.

Case 2: When the tag #1 completes the random access, the tag #1 has not completed the collection of the sensor data.

In this case, steps 510 to 517 may be performed.

Step 510: The tag #1 sends a registration request message to the TMF through the reader/writer. Correspondingly, the TMF receives the registration request message from the tag #1.

The registration request message is for registering with the TMF, and the registration request message carries an identifier of the tag #1 but does not carry the sensor data.

Step 511: The TMF sends a registration accept message #1 to the reader/writer. Correspondingly, the reader/writer receives the registration accept message #1 from the TMF. The registration accept message #1 indicates that the registration of the tag #1 succeeds. Optionally, the registration accept message #1 may carry one or more of reporting indication information, duration information #1, duration information #2, indication information #1, or periodicity information #1.

Step 512: The reader/writer sends a registration accept message #2 to the tag #1. Correspondingly, the tag #1 receives the registration accept message #2 from the reader/writer. The registration accept message #2 indicates that the registration of the tag #1 succeeds. Optionally, the registration accept message #2 may carry one or more of the reporting indication information, the duration information #1, the duration information #2, the indication information #1, or periodicity information #2.

Optionally, step 513: When the registration accept message #2 carries the indication information #1 and the tag #1 has not completed the collection of the sensor data, the tag #1 sends feedback information to the reader/writer. In other words, the reader/writer receives the feedback information from the tag #1. The feedback information indicates that the collection of the sensor data has not been completed.

Step 514: The tag #1 completes the collection of the sensor data.

Step 515: The tag #1 sends a service reporting message to the TMF through the reader/writer. Correspondingly, the TMF receives the service reporting message from the tag. The service reporting message includes the sensor data.

Optionally, step 516: If the tag #1 does not receive, in preset time, a service accept message that indicates that the sensor data is successfully received, the tag #1 may send the service reporting message to the TMF again through the reader/writer, where the service reporting message includes the sensor data.

Optionally, step 517: The TMF sends, to the tag #1 through the reader/writer, the service accept message that indicates that the sensor data is successfully received. Correspondingly, the tag #1 receives the service accept message from the TMF.

For steps 510 to 517, refer to steps 407 and 409 to 415. Details are not described again.

After the tag #1 completes reporting of the sensor data, steps 518 to 520 may be performed.

Step 518: After receiving the sensor data from the tag #1, the TMF sends the identifier of the tag #1 and the corresponding sensor data to the AF. Correspondingly, the AF receives the identifier of the tag #1 and the sensor data from the TMF.

Step 519: The TMF sends a command of inventorying a next tag to the reader/writer. Correspondingly, the reader/writer receives the command from the TMF.

Step 520: Repeat steps 506 to 519, till all tags are inventoried.

It should be noted that the method 500 may be applied to a scenario in which the tag does not need to perform security authentication with the TMF, for example, a scenario in which the tag has been registered with the TMF, where the tag has performed security authentication with the TMF before the registration with the TMF is completed; and for another example, a scenario in which the TMF trusts the tag.

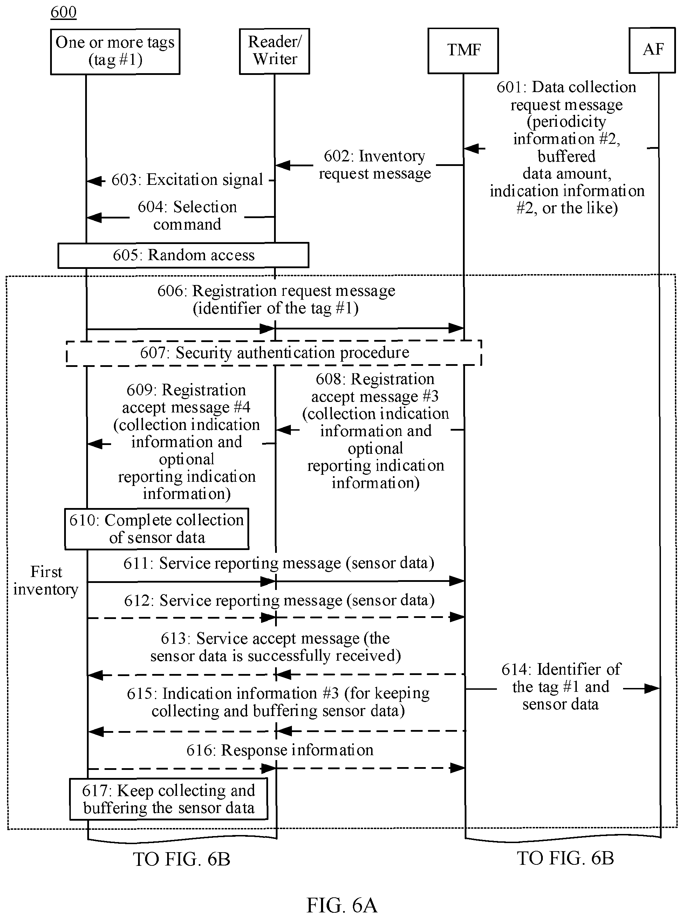

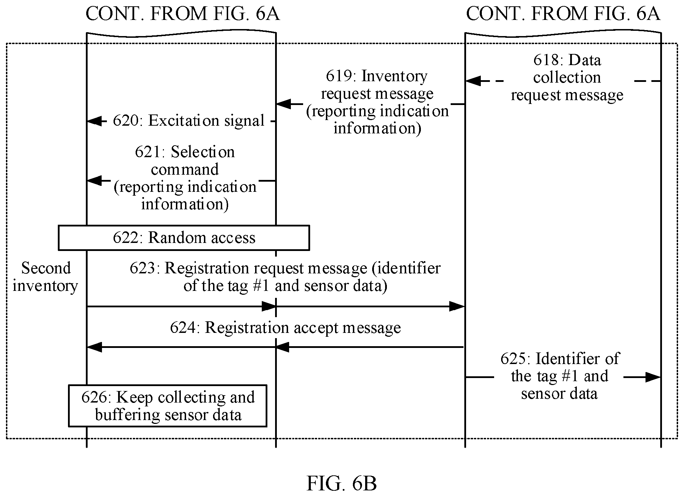

With reference to FIG. 6A and FIG. 6B, the following describes in detail first inventory and second inventory of a tag by using an example in which an AF provides, to a TMF, a registration accept message carrying first information or second information.

The tag, the TMF, collection indication information, a service reporting message, a data collection request message, and reporting indication information in FIG. 6A and FIG. 6B may respectively correspond to the internet of things device, the core network element, the first information, the uplink signaling related to a service, the data request message, and the second information in the method 300.

FIG. 6A and FIG. 6B are a schematic flowchart of a data collection method 600 according to this application.

Step 601: The AF sends the data collection request message to the TMF. Correspondingly, the TMF receives the data collection request message from the AF.

The data collection request message is for notifying the TMF to read data of the tag. The data collection request message usually carries information related to data collection. The information related to data collection may include one or more of area information for data collection, a range of tag identifiers, or a tag type. The tag identifier is information that can uniquely determine an identifier, for example, a TID or an EPC.

Optionally, the information related to data collection may further include one or more of periodicity information #2, a buffered data amount, or indication information #2. The periodicity information #2 indicates a periodicity for starting an inventory procedure, or indicates a periodicity for collecting latest sensor data. The buffered data amount is a data amount for triggering the TMF to report sensor data to the AF. For example, the buffered data amount is sensor data of one tag, that is, after obtaining the sensor data of the single tag, the TMF reports the sensor data of the single tag to the AF in time. For another example, the buffered data amount is sensor data of a preset quantity of tags, that is, after obtaining the sensor data of the preset quantity of tags, the TMF reports the sensor data of the preset quantity of tags to the AF in a centralized manner. The indication information #2 indicates a manner of delivering the collection indication information, where the collection indication information indicates the tag to collect sensor data. The manner of delivering the collection indication information may refer to an occasion for sending the collection indication information, or a message or a command carrying the collection indication information. For example, an inventory request message may carry the collection indication information. For example, a registration accept message may carry the collection indication information. In the method 600, an example in which the registration accept message carries the collection indication information is used.

Step 602: The TMF sends the inventory request message to a reader/writer based on the data collection request message. Correspondingly, the reader/writer receives the inventory request message from the TMF. The inventory request message is for requesting the reader/writer to inventory the tag.

Step 603: The reader/writer sends an excitation signal to a tag in coverage of the reader/writer based on the inventory request message. Correspondingly, the tag in the coverage of the reader/writer receives the excitation signal sent by the reader/writer, so that the tag is powered.

Step 604: The reader/writer sends a selection command to the tag in the coverage of the reader/writer. Correspondingly, the tag in the coverage of the reader/writer receives the selection command sent by the reader/writer. The selection command is for selecting a to-be-inventoried tag.

Step 605: The tag performs matching based on the selection command, and performs a random access procedure with the reader/writer when the matching succeeds.

Step 606: The tag that successfully performs random access sends a registration request message to the TMF through the reader/writer. Correspondingly, the TMF receives the registration request message from the tag. The registration request message is for registering with the TMF, and the registration request message carries the tag identifier.

Optionally, step 607: The tag that successfully performs random access performs a security authentication procedure with the TMF.

For steps 602 to 607, refer to steps 202 to 207. Details are not described again. In steps 602 to 607, because the inventory request message and the selection command do not carry the collection indication information, the tag performs a normal random access or registration process. In the method 600, an example in which the tag that successfully performs random access is a tag #1 is used.

Step 608: The TMF sends a registration accept message #3 to the reader/writer. Correspondingly, the reader/writer receives the registration accept message #3 from the TMF. The registration accept message #3 indicates that the registration of the tag #1 succeeds.

The registration accept message #3 carries the collection indication information, where the collection indication information indicates the tag to collect the sensor data. In a possible implementation, when the data collection request message in step 601 carries the indication information #2 and the indication information #2 indicates to carry the collection indication information in the registration accept message, the TMF carries the collection indication information in the registration accept message based on the indication information #2.

Optionally, the registration accept message #3 may further carry the reporting indication information, where the reporting indication information indicates the tag #1 to report sensor data. Optionally, the registration accept message #3 may further carry one or more of duration information #1, duration information #2, indication information #1, or periodicity information #1. For detailed descriptions, refer to step 409.

If the tag performs the security authentication procedure with the TMF, the TMF sends the registration accept message #3 to the tag when security authentication succeeds.

Step 609: The reader/writer sends a registration accept message #4 to the tag #1. Correspondingly, the tag #1 receives the registration accept message #4 from the reader/writer. The registration accept message #4 indicates that the registration of the tag #1 succeeds. The registration accept message #4 may carry the collection indication information, where the collection indication information indicates the tag to collect the sensor data.

Optionally, the registration accept message #4 may further carry the reporting indication information, where the reporting indication information indicates the tag #1 to report the sensor data.

Optionally, the registration accept message #4 may further carry one or more of the duration information #1, the duration information #2, the indication information #1, or the periodicity information #2. For detailed descriptions, refer to step 410.

Step 610: The tag #1 completes the collection of the sensor data.

Step 611: The tag #1 sends a service reporting message to the TMF through the reader/writer. Correspondingly, the TMF receives the service reporting message from the tag. The service reporting message includes the sensor data.

In a possible implementation, the tag #1 actively reports the sensor data to the reader/writer after completing the collection of the sensor data.

In another possible implementation, if the registration accept message #4 includes the reporting indication information, the tag #1 may report, after completing the collection of the sensor data, the sensor data to the reader/writer based on the reporting indication information.

Optionally, step 612: If the tag #1 does not receive, in preset time, a service accept message that indicates that the sensor data is successfully received, the tag #1 may send the service reporting message to the TMF again through the reader/writer, where the service reporting message includes the sensor data.

Optionally, step 613: The TMF sends, to the tag #1 through the reader/writer, the service accept message that indicates that the sensor data is successfully received. Correspondingly, the tag #1 receives the service accept message from the TMF.

Step 614: After receiving the sensor data from the tag #1, the TMF sends an identifier of the tag #1 and the corresponding sensor data to the AF. Correspondingly, the AF receives the identifier of the tag #1 and the sensor data from the TMF.

In a possible implementation, when the data collection request message in step 601 carries the buffered data amount, the TMF sends the sensor data of the tag #1 to the AF based on the buffered data amount. For example, the buffered data amount is sensor data of one tag. After receiving the sensor data of the tag #1, the TMF may send the identifier of the tag #1 and the corresponding sensor data to the AF. For another example, the buffered data amount is sensor data of a preset quantity of tags. After receiving the sensor data of the preset quantity of tags, the TMF may send the sensor data of the preset quantity of tags to the AF, where the sensor data of the preset quantity of tags includes the sensor data of the tag #1.

Optionally, step 615: The TMF sends indication information #3 to the tag #1 through the reader/writer. Correspondingly, the tag #1 receives the indication information #3 from the TMF. The indication information #3 indicates the tag #1 to keep collecting and buffering sensor data.

Optionally, step 616: The tag #1 sends response information to the TMF through the reader/writer. Correspondingly, the TMF receives the response information from the tag #1. The response information indicates that the tag #1 successfully receives the indication information #3.

It should be noted that steps 615 and 616 are merely a manner of causing the tag #1 to keep collecting and buffering the sensor data in subsequent time. In another manner, the tag #1 may keep collecting and buffering the sensor data according to a built-in policy after receiving the collection indication information carried in the registration accept message, till the TMF notifies the tag #1 to stop collecting and buffering the sensor data. In still another manner, after receiving the collection indication information carried in the registration accept message, the tag #1 may need to keep collecting and buffering the sensor data by default, till the TMF notifies the tag #1 to stop collecting and buffering the sensor data.

Step 617: The tag #1 keeps collecting and buffering the sensor data.

Because the tag #1 keeps collecting and buffering the sensor data, when the tag #1 needs to be inventoried again subsequently, the tag #1 may include the sensor data in the registration request message.

Optionally, a next tag may continue to be inventoried subsequently, and steps 605 to 617 are repeated, till all tags are inventoried.

Subsequently, the TMF may inventory the tag again. A detailed procedure is as follows.

Optionally, step 618: The AF sends a data collection request message to the TMF. Correspondingly, the TMF receives the data collection request message from the AF. The data collection request message is for notifying the TMF to read data of the tag.

It should be noted that step 618 is only a manner of triggering to inventory the tag again. In another manner, when the data collection request message in step 601 carries the periodicity information #2, the TMF may periodically start inventory of the tag based on the periodicity indicated by the periodicity information #2.

Step 619: The TMF sends an inventory request message to the reader/writer based on the data collection request message. Correspondingly, the reader/writer receives the inventory request message from the TMF. The inventory request message is for requesting the reader/writer to inventory the tag. The inventory request message may carry information about the to-be-inventoried tag, for example, a range of tag identifiers and a tag type. In addition, the inventory request message may further carry the reporting indication information, where the reporting indication information indicates the tag to report collected sensor data.

Step 620: The reader/writer sends an excitation signal to the tag in the coverage of the reader/writer based on the inventory request message. Correspondingly, the tag in the coverage of the reader/writer receives the excitation signal sent by the reader/writer, so that the tag is powered.

Step 621: The reader/writer sends a selection command to the tag in the coverage of the reader/writer. Correspondingly, the tag in the coverage of the reader/writer receives the selection command sent by the reader/writer. The selection command is for selecting the to-be-inventoried tag. In addition, the selection command may further carry the reporting indication information, where the reporting indication information indicates the tag to report the collected sensor data.

Step 622: The tag that successfully performs matching performs a random access procedure with the reader/writer.

In the method 600, the example in which the tag that successfully performs random access is the tag #1 is used.

Because the tag #1 keeps collecting and buffering the sensor data, when the tag #1 needs to be inventoried again subsequently, the tag #1 may include the sensor data in the registration request message. Details are as follows.

Step 623: The tag #1 sends a registration request message to the TMF through the reader/writer. Correspondingly, the TMF receives the registration request message from the tag #1. The registration request message is for registering with the TMF, and the registration request message carries the identifier of the tag #1 and the sensor data.

Step 624: The TMF sends a registration accept message to the tag #1 through the reader/writer. Correspondingly, the tag receives the registration accept message from the TMF. The registration accept message indicates that the registration of the tag #1 succeeds and the sensor data is successfully received.

Step 625: The tag #1 keeps collecting and buffering sensor data.

Step 626: After receiving the sensor data from the tag #1, the TMF sends the identifier of the tag #1 and the corresponding sensor data to the AF. Correspondingly, the AF receives the identifier of the tag #1 and the sensor data from the TMF. For step 626, refer to step 614. Details are not described again.

A next tag may continue to be inventoried subsequently, and steps 622 to 626 are repeated, till all tags are inventoried.

Optionally, when the tag is inventoried for the last time, after receiving the sensor data from the tag, the TMF may send indication information #4 to the tag through the reader/writer, where the indication information #4 indicates the tag to stop collection of the sensor data. In this case, the tag may stop the collection of the sensor data.

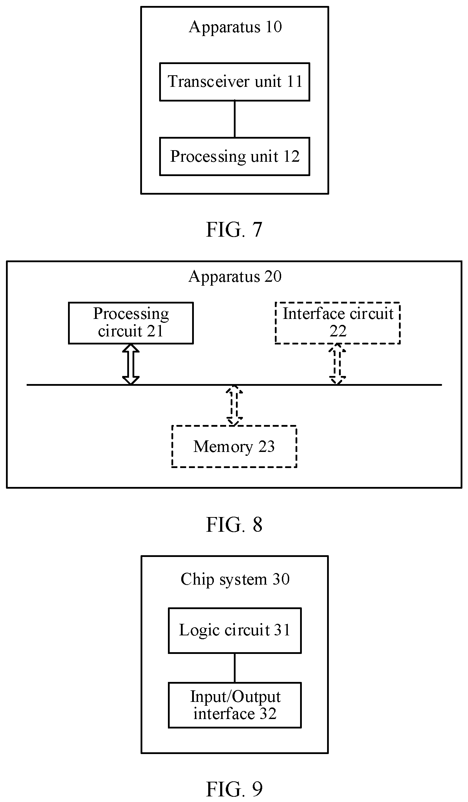

The foregoing describes in detail method embodiments provided in this application with reference to FIG. 3 to FIG. 6B. The following describes apparatus embodiments of this application with reference to FIG. 7 to FIG. 9.

It may be understood that, to implement functions in the foregoing embodiments, apparatuses in FIG. 7 to FIG. 9 include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software.

FIG. 7 and FIG. 8 each are a diagram of a structure of a possible apparatus according to an embodiment of this application. These apparatuses may be configured to implement functions of the internet of things device, the core network element, the AF, or the reader/writer in the foregoing method embodiments, and therefore can also implement beneficial effects of the foregoing method embodiments.

As shown in FIG. 7, an apparatus 10 includes a transceiver unit 11 and a processing unit 12.

When the apparatus 10 is configured to implement functions of the internet of things device in the foregoing method embodiments, the transceiver unit 11 is configured to perform a receiving/sending step of the internet of things device, for example, step 303, 305, 403, 404, 406, 407, 410, 411, 413, 414, 415, 503, 504, 506, 508, 509, 510, 512, 513, 515, 516, 517, 603, 604, 606, 607, 609, 611, 612, 613, 615, 616, 620, 621, 622, 623, or 624, and the processing unit 12 is configured to perform a processing step of the internet of things device, for example, step 304, 405, 412, 505, 507, 514, 610, 617, or 626.

When the apparatus 10 is configured to implement functions of the reader/writer in the foregoing method embodiments, the transceiver unit 11 is configured to perform a receiving/sending step of the reader/writer, for example, step 303, 305, 302, 306, 402, 403, 404, 406, 407, 408, 409, 410, 411, 413, 414, 415, 417, 502, 503, 504, 506, 508, 509, 510, 511, 512, 513, 515, 516, 517, 519, 602, 603, 604, 605, 606, 607, 608, 609, 611, 612, 613, 614, 615, 616, 619, 620, 621, 622, 623, or 624, and the processing unit 12 is configured to perform a processing step of the reader/writer.

When the apparatus 10 is configured to implement functions of the core network element in the foregoing method embodiments, the transceiver unit 11 is configured to perform a sending/receiving step of the core network element, for example, step 301, 302, 306, 307, 401, 402, 407, 408, 409, 413, 414, 415, 416, 417, 501, 502, 508, 509, 510, 511, 515, 516, 517, 518, 519, 601, 602, 606, 607, 608, 611, 612, 613, 614, 615, 616, 618, 619, 623, 623, 624, or 625, and the processing unit 12 is configured to perform a processing step of the core network element.

When the apparatus 10 is configured to implement functions of the AF in the foregoing method embodiments, the transceiver unit 11 is configured to perform a receiving/sending step of the AF, for example, step 301, 307, 401, 416, 501, 518, 601, 614, 618, or 625, and the processing unit 12 is configured to perform a processing step of the AF.

For more detailed descriptions of the transceiver unit 11 and the processing unit 12, refer to related descriptions in the foregoing method embodiments. Details are not described herein.

As shown in FIG. 8, an apparatus 20 includes a processing circuit 21. The processing circuit 21 is coupled to a memory 23. The memory 23 is configured to store instructions. When the apparatus 20 is configured to implement the foregoing method, the processing circuit 21 is configured to execute the instructions in the memory 23, to implement a function of the foregoing processing unit 12.

Optionally, the apparatus 20 further includes the memory 23.

Optionally, the apparatus 20 further includes an interface circuit 22. The interface circuit may be referred to as a communication interface. The processing circuit 21 and the interface circuit 22 are coupled to each other. It may be understood that the interface circuit 22 may be a transceiver or an input/output interface. When the apparatus 20 is configured to implement the foregoing method, the processing circuit 21 is configured to execute the instructions to implement the function of the foregoing processing unit 12, and the interface circuit 22 is configured to implement a function of the foregoing transceiver unit 11.

Optionally, the apparatus 20 may be an internet of things device, a core network element, an AF, or a reader/writer.

Optionally, the apparatus 20 may be a chip used in the internet of things device, the core network element, the AF, or the reader/writer.

For example, when the apparatus 20 is the chip used in the internet of things device, the core network element, the AF, or the reader/writer, the chip implements a function of the internet of things device, the core network element, the AF, or the reader/writer in the foregoing method embodiments. The chip receives information from another module (for example, a radio frequency module or an antenna) in the internet of things device, the core network element, the AF, or the reader/writer, where the information is sent by another apparatus to the internet of things device, the core network element, the AF, or the reader/writer; or the chip sends information to the another module (for example, the radio frequency module or the antenna) in the internet of things device, the core network element, the AF, or the reader/writer, where the information is sent by the internet of things device, the core network element, the AF, or the reader/writer to the another apparatus.

FIG. 9 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the internet of things device, the core network element, the AF, or the reader/writer in the foregoing method embodiments.

For example, the logic circuit 31 is configured to implement a processing-related operation performed by the internet of things device, the core network element, the AF, or the reader/writer in the foregoing method embodiments; and the input/output interface 32 is configured to implement a sending and/or receiving-related operation performed by the internet of things device, the core network element, the AF, or the reader/writer in the foregoing method embodiments.

This application further provides a communication apparatus, including a processing circuit. The processing circuit is coupled to a memory. The memory is configured to store a computer program or instructions and/or data. The processing circuit is configured to execute the computer program or the instructions stored in the memory, or read the data stored in the memory, to perform the method in the foregoing method embodiments. Optionally, there are one or more processing circuits. Optionally, the communication apparatus includes the memory. Optionally, there are one or more memories. Optionally, the memory and the processing circuit are integrated together or separately arranged.

This application further provides a chip, including a processing circuit. The processing circuit is coupled to a memory. The memory is configured to store a computer program or instructions. The processing circuit is configured to execute the computer program or the instructions stored in the memory, to implement the method performed by the internet of things device, the core network element, the AF, or the reader/writer in the foregoing method embodiments.

This application further provides a computer-readable storage medium. The computer-readable storage medium stores computer instructions for implementing the method performed by the internet of things device, the core network element, the AF, or the reader/writer in the foregoing method embodiments.

This application further provides a computer program product, including instructions. When the instructions are executed by a computer, the method performed by the internet of things device, the core network element, the AF, or the reader/writer in the foregoing method embodiments is implemented.

This application further provides a communication system. The communication system includes at least one of the internet of things device, the core network element, the AF, or the reader/writer in the foregoing embodiments.

For explanations and beneficial effects of related content in any one of the apparatuses provided above, refer to the corresponding method embodiment provided above. Details are not described herein again.

It may be understood that the processing circuit in embodiments of this application may be a processor or a circuit configured to perform a processing operation in the processor. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in an internet of things device, a core network element, an AF, or a reader/writer. Certainly, the processor and the storage medium may alternatively exist in the internet of things device, the core network element, the AF, or the reader/writer as discrete components.

All or a part of the foregoing embodiments may be implemented by using software, hardware, firmware, or any combination thereof. When software is used to implement the technical solutions, all or a part of the technical solutions may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing descriptions are examples for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

## Claims

1. A data collection method, wherein the method comprises:
receiving, by a first internet of things device, first information from a reader/writer, wherein the first information indicates the first internet of things device to collect sensor data, the first information is carried in a first excitation signal, a first selection command, downlink signaling in a first random access procedure, a first registration message, or downlink signaling in a first security authentication process, and the first registration message indicates that the first internet of things device has successfully registered with a core network element;
collecting, by the first internet of things device, first sensor data based on the first information;
and
sending, by the first internet of things device, the first sensor data to the reader/writer.

2. The method according to claim 1, wherein
the downlink signaling in the first random access procedure comprises a query command and/or an acknowledgement command;
the first registration message is a registration accept message or a registration response message; and/or
the downlink signaling in the first security authentication process comprises an authentication success message and/or an authentication request message.

3. The method according to claim 1 or 2, wherein
the first information is carried in the first excitation signal, the first selection command, or the downlink signaling in the first random access procedure; and
the first sensor data is carried in a second registration message, uplink signaling in the first security authentication process, or uplink signaling related to service transmission, and the second registration message is for requesting to register with the core network element.

4. The method according to claim 1 or 2, wherein
the first information is carried in the first registration message or the downlink signaling in the first security authentication process; and
the first sensor data is carried in uplink signaling related to service transmission.

5. The method according to any one of claims 1 to 4, wherein
the method further comprises: receiving, by the first internet of things device, second information from the reader/writer, wherein the second information indicates the first internet of things device to report sensor data; and
the sending, by the first internet of things device, the first sensor data to the reader/writer comprises: sending, by the first internet of things device, the first sensor data to the reader/writer based on the second information, wherein
the first information is carried in the first excitation signal, the first selection command, the downlink signaling in the first random access procedure, or the downlink signaling in the first security authentication process, and the second information is carried in the first registration message.

6. The method according to any one of claims 1 to 5, wherein after the sending the first sensor data, the method further comprises:
receiving, by the first internet of things device, the first information from the reader/writer;
collecting and buffering, by the first internet of things device, second sensor data based on the first information;
receiving, by the first internet of things device, second information, wherein the second information indicates the first internet of things device to report sensor data, the second information is carried in a second excitation signal, a second selection command, or downlink signaling in a second random access procedure, the second excitation signal is for powering a to-be-inventoried internet of things device, and the second selection command is for selecting the to-be-inventoried internet of things device;
sending, by the first internet of things device, a third registration message to the reader/writer based on the second information, wherein the third registration message is for requesting to register with the core network element, and the third registration message comprises the second sensor data; and
after sending the second sensor data, receiving, by the first internet of things device, the first information from the reader/writer.

7. The method according to any one of claims 1 to 6, wherein the method further comprises:
receiving, by the first internet of things device, third information from the reader/writer, wherein the third information indicates the first internet of things device to send feedback information when the collection of the sensor data is not completed, and the feedback information indicates to maintain a communication connection to the first internet of things device.

8. The method according to claim 7, wherein
the third information and the first information are carried in same signaling; or
the first information is carried in the first excitation signal, the first selection command, the downlink signaling in the first random access procedure, or the downlink signaling in the first security authentication process, and the third information is carried in the first registration message.

9. The method according to any one of claims 1 to 6, wherein
the first internet of things device completes the collection of the first sensor data after first duration; and
the sending, by the first internet of things device, the first sensor data to the reader/writer comprises: re-establishing, by the first internet of things device, a communication connection to the reader/writer, and sending the first sensor data to the reader/writer on the communication connection.

10. The method according to any one of claims 1 to 9, wherein the first excitation signal is for powering the to-be-inventoried internet of things device, the first selection command is for selecting the to-be-inventoried internet of things device, and the first internet of things device belongs to the to-be-inventoried internet of things device.

11. A data collection method, wherein the method comprises:
receiving, by a core network element, a data request message from an application function network element, wherein the data request message is for requesting sensor data of a to-be-inventoried internet of things device, and the to-be-inventoried internet of things device comprises a first internet of things device;
sending, by the core network element, first information to a reader/writer based on the data request message, wherein the first information indicates the first internet of things device to collect sensor data, the first information is carried in a first inventory request message, a first registration message, or downlink signaling in a first security authentication process, and the first registration message indicates that the first internet of things device has successfully registered with the core network element;
receiving, by the core network element, first sensor data of the first internet of things device from the reader/writer; and
sending, by the core network element, the first sensor data to the application function network element.

12. The method according to claim 11, wherein
the first registration message is a registration accept message or a registration response message; and/or
the downlink signaling in the first security authentication process comprises an authentication success message and/or an authentication request message.

13. The method according to claim 11 or 12, wherein
the first information is carried in the first inventory request message; and
the first sensor data is carried in a second registration message, uplink signaling in the first security authentication process, or uplink signaling related to service transmission, and the second registration message is for requesting to register with the core network element.

14. The method according to claim 11 or 12, wherein
the first information is carried in the first registration message or the downlink signaling in the first security authentication process; and
the first sensor data is carried in uplink signaling related to service transmission.

15. The method according to any one of claims 11 to 14, wherein the method further comprises:
sending, by the core network element, second information to the reader/writer, wherein the second information indicates the first internet of things device to report sensor data, wherein
the first information is carried in the first inventory request message, and the second information is carried in the first registration message.

16. The method according to any one of claims 11 to 15, wherein the data request message comprises periodicity information, wherein the periodicity information indicates a periodicity for inventorying the to-be-inventoried internet of things device; transmission of the first information and the first sensor data is performed in a first periodicity; and the method further comprises:
sending, by the core network element in a second periodicity, the first information to the reader/writer by using a second inventory request message or a fourth registration message, wherein the fourth registration message indicates that the first internet of things device has successfully registered with the core network element.

17. The method according to any one of claims 11 to 15, wherein the data request message comprises periodicity information, wherein the periodicity information indicates a periodicity for inventorying the to-be-inventoried internet of things device; transmission of the first information and the first sensor data is performed in a first periodicity; and the method further comprises:
after receiving the first sensor data, sending, by the core network element, the first information to the reader/writer in the first periodicity; and
sending, by the core network element in a second periodicity, second information to the reader/writer by using a second inventory request message, wherein the second information indicates the first internet of things device to report sensor data; receiving, by the core network element, second sensor data of the first internet of things device from the reader/writer, wherein the second sensor data is carried in a third registration message, and the third registration message is for requesting to register with the core network element; and after receiving the second sensor data, sending, by the core network element, the first information to the reader/writer.

18. The method according to any one of claims 11 to 17, wherein
the data request message comprises a first data amount, wherein the first data amount is a data amount for triggering the core network element to report sensor data to the application function network element; and
the sending, by the core network element, the first sensor data to the application function network element comprises: when sensor data buffered in the core network element reaches the first data amount, sending, by the core network element, the sensor data buffered in the core network element to the application function network element, wherein the sensor data buffered in the core network element comprises the first sensor data.

19. The method according to any one of claims 11 to 18, wherein the method further comprises:
sending, by the core network element, third information to the reader/writer, wherein the third information indicates the first internet of things device to send feedback information when the collection of the sensor data is not completed, and the feedback information indicates to maintain a communication connection to the first internet of things device.

20. The method according to claim 19, wherein
the third information and the first information are carried in same signaling; or
the first information is carried in the first inventory request message or the downlink signaling in the first security authentication process, and the third information is carried in the first registration message.

21. The method according to any one of claims 11 to 20, wherein
the method further comprises: not receiving, by the core network element, the first sensor data from the reader/writer in first duration; and after the first duration, disconnecting, by the core network element, the communication connection to the first internet of things device, and sending fifth information to the reader/writer, wherein the fifth information indicates to inventory a next internet of things device; and
the receiving, by the core network element, the first sensor data of the first internet of things device from the reader/writer comprises: re-establishing, by the core network element, a communication connection to the first internet of things device, and receiving the first sensor data on the communication connection.

22. A data collection method, wherein the method comprises:
determining, by an application function network element, a data request message, wherein the data request message is for requesting sensor data of a to-be-inventoried internet of things device, and the data request message comprises one or more of the following information:
periodicity information, a buffered data amount, or indication information, wherein the periodicity information indicates a periodicity for inventorying the to-be-inventoried internet of things device, the buffered data amount is a data amount for triggering a core network element to report sensor data to the application function network element, the indication information indicates signaling that carries first information, the first information indicates a first internet of things device to collect sensor data, and the first internet of things device belongs to the to-be-inventoried internet of things device; and
sending, by the application function network element, the data request message to the core network element.

23. The method according to claim 22, wherein the signaling that carries the first information is an inventory request message, a registration message, or downlink signaling in a security authentication process, and the registration message indicates that the first internet of things device has successfully registered with the core network element.

24. A data collection method, comprising:
receiving, by a reader/writer, first information from a core network element, wherein the first information indicates a first internet of things device to collect sensor data;
sending, by the reader/writer, the first information to the first internet of things device;
receiving, by the reader/writer, first sensor data from the first internet of things device; and
sending, by the reader/writer, the first sensor data to the core network element, wherein the first information is carried in downlink signaling that is sent before the first internet of things device registers with the core network element.

25. The method according to claim 24, wherein
the first information received by the reader/writer is carried in a first inventory request message;
the first information sent by the reader/writer is carried in a first excitation signal, a first selection command, or downlink signaling in a first random access procedure; and
the first sensor data is carried in a second registration message, uplink signaling in a first security authentication process, or uplink signaling related to service transmission, and the second registration message is for requesting to register with the core network element.

26. The method according to claim 24 or 25, wherein the first information is carried in a first registration message or downlink signaling in the first security authentication process; and
the first sensor data is carried in the uplink signaling related to service transmission.

27. The method according to any one of claims 24 to 26, wherein the method further comprises:
receiving, by the reader/writer, second information from the core network element, wherein the second information indicates the first internet of things device to report sensor data; and
sending, by the reader/writer, the second information to the first internet of things device, wherein the first information received by the reader/writer is carried in the first inventory request message, the first information sent by the reader/writer is carried in the first excitation signal, the first selection command, the downlink signaling in the first random access procedure, or the downlink signaling in the first security authentication process, and the second information is carried in the first registration message.

28. The method according to any one of claims 24 to 27, wherein after the sending the first sensor data, the method further comprises:
receiving, by the reader/writer, the first information from the core network element, and sending the first information to the first internet of things device;
receiving, by the reader/writer, second information from the core network element, wherein the second information indicates the first internet of things device to report sensor data, and the second information is carried in a second inventory request message;
sending, by the reader/writer, the second information to the first internet of things device by using a second excitation signal, a second selection command, or downlink signaling in a second random access procedure, wherein the second excitation signal is for powering the to-be-inventoried internet of things device, and the second selection command is for selecting the to-be-inventoried internet of things device;
receiving, by the reader/writer, a third registration message from the first internet of things device, wherein the third registration message is for requesting to register with the core network element, and the third registration message comprises second sensor data;
sending, by the reader/writer, the third registration message to the core network element; and
after sending the third registration message, receiving, by the reader/writer, the first information from the core network element, and sending the first information to the first internet of things device.

29. The method according to any one of claims 24 to 28, wherein the method further comprises:
receiving, by the reader/writer, third information from the core network element, wherein the third information indicates the first internet of things device to send feedback information when the collection of the sensor data is not completed, and the feedback information indicates to maintain a communication connection to the first internet of things device; and
sending, by the reader/writer, the third information to the first internet of things device.

30. The method according to claim 29, wherein the third information and the first information are carried in same signaling; or the first information received by the reader/writer is carried in the first inventory request message, the first information sent by the reader/writer is carried in the first excitation signal, the first selection command, or the downlink signaling in the first random access procedure, and the third information is carried in the first registration message.

31. The method according to claim 29 or 30, wherein the third information further indicates a periodicity for sending the feedback information.

32. The method according to any one of claims 29 to 31, wherein the method further comprises:
receiving, by the reader/writer, one or more pieces of feedback information from the first internet of things device, and sending the one or more pieces of feedback information to the core network element.

33. The method according to any one of claims 24 to 28, wherein the method further comprises:
not receiving, by the reader/writer, the first sensor data from the reader/writer in first duration;
and
after the first duration, disconnecting, by the reader/writer, the communication connection to the first internet of things device, and receiving fifth information from the core network element, wherein the fifth information indicates to inventory a next internet of things device; and
the receiving, by the reader/writer, the first sensor data from the first internet of things device comprises:
re-establishing, by the reader/writer, a communication connection to the first internet of things device, and receiving the first sensor data on the communication connection.

34. The method according to claim 33, wherein the method further comprises:
starting, by the core network element, a first timer, wherein timing duration of the first timer is the first duration; and
before receiving the fifth information, sending, by the reader/writer, sixth information to the core network element, wherein the sixth information is for requesting to inventory the next internet of things device.

35. The method according to claim 33 or 34, wherein the method further comprises:
receiving, by the reader/writer, fourth information from the core network element, wherein the fourth information indicates the first duration.

36. The method according to any one of claims 33 to 35, wherein the method further comprises:
sending, by the reader/writer, the fourth information to the first internet of things device.

37. A communication system, comprising at least one of the following devices:
a communication apparatus configured to perform the method according to any one of claims 1 to 10;
a communication apparatus configured to perform the method according to any one of claims 11 to 21;
a communication apparatus configured to perform the method according to claim 22 or 23;
or
a communication apparatus configured to perform the method according to any one of claims 24 to 36.

38. A communication apparatus, comprising a module or a unit configured to perform the method according to any one of claims 1 to 36.

39. A communication apparatus, comprising:
a processing circuit and a memory, wherein the memory is configured to store a computer program or instructions, and the processing circuit is configured to execute the computer program or the instructions stored in the memory, to cause the apparatus to perform the method according to any one of claims 1 to 36.

40. The apparatus according to claim 39, wherein the apparatus is a chip.

41. A computer-readable storage medium, wherein the computer-readable storage medium stores a computer program or instructions, and when the computer program or the instructions are run on a computer, the computer is caused to perform the method according to any one of claims 1 to 36.

42. A computer program product, wherein the computer program product comprises instructions for performing the method according to any one of claims 1 to 36.
